(19) Europäisches Patentamt
European Patent Office
Office européen des brevets

(11) **EP 2 484 723 B1**

(12) **EUROPEAN PATENT SPECIFICATION**

(45) Date of publication and mention
of the grant of the patent:
**17.06.2020 Bulletin 2020/25**

(51) Int Cl.:
***C08L 53/02*** *(2006.01)*    ***C08L 23/02*** *(2006.01)*
***C08L 91/00*** *(2006.01)*

(21) Application number: **10820701.0**

(22) Date of filing: **30.09.2010**

(86) International application number:
**PCT/JP2010/067181**

(87) International publication number:
**WO 2011/040586 (07.04.2011 Gazette 2011/14)**

(54) **SEALING MATERIAL FOR MEDICAL USE COMPRISING A THERMOPLASTIC ELASTOMER COMPOSITION**

DICHTUNGSMATERIAL ZUR MEDIZINISCHEN VERWENDUNG ENTHALTEND EINE THERMOPLASTISCHE ELASTOMERZUSAMMENSETZUNG

MATÉRIAU DE SCELLAGE POUR UTILISATION MÉDICALE COMPRENANT UNE COMPOSITION D'ÉLASTOMÈRE THERMOPLASTIQUE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **30.09.2009 JP 2009225748
30.09.2009 JP 2009225783**

(43) Date of publication of application:
**08.08.2012 Bulletin 2012/32**

(73) Proprietor: **Kuraray Co., Ltd.
Okayama 710-0801 (JP)**

(72) Inventor: **SASAKI, Hiromitsu
Kamisu-shi
Ibaraki 314-0197 (JP)**

(74) Representative: **Vossius & Partner
Patentanwälte Rechtsanwälte mbB
Siebertstrasse 3
81675 München (DE)**

(56) References cited:
EP-A1- 0 918 070      EP-A1- 1 852 446
EP-A1- 1 932 881      JP-A- 9 227 858
JP-A- 61 037 242      JP-A- 2004 250 682
JP-A- 2005 255 830    JP-A- 2005 281 706
JP-A- 2007 091 974

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a sealing material for medical use comprising a styrene thermoplastic elastomer composition that is excellent in flexibility, molding processability, visual transparency, damping property, retention of a softening agent, and compression set at a high temperature, and has these properties in a well balanced manner.

The present invention also relates to the use of the styrene thermoplastic elastomer composition for a member for sealing a content in the medical field, wherein the sealing material is excellent in oxygen gas barrier property, liquid leakage resistance (sealing property), coring resistance, and liquid leakage resistance after needlestick.

Background Art

A hydrogenated product of a block copolymer having a polymer block mainly containing a vinyl aromatic compound and a polymer block mainly containing a conjugated diene not only is excellent in heat resistance, weather resistance, impact resistance and flexibility, but also exhibits, without vulcanization, strength and elastic property that are equivalent to ordinary vulcanized rubber. Owing to the characteristics , the hydrogenated product of a block copolymer is used in recent years in various fields including medical members, automobile parts, consumer electric product parts, toys, sporting products, daily goods and the like, in the form of not only a sole product, but also a thermoplastic resin composition having a thermoplastic resin, such as a polyolefin resin, and various additives, such as a softening agent, added thereto.

For example, Patent Document 1 discloses an elastomer composition that is inexpensive and rich in flexibility and is excellent in thermal deformation resistance and mechanical strength, and contains 100 parts by weight of a hydrogenated derivative of a block copolymer represented by the general formula A-(B-A)$_n$ (wherein A represents a polymer block of a monovinyl-substituted aromatic hydrocarbon, B represents an elastomer polymer block of a conjugated diene, and n represents an integer of from 1 to 5), from 150 to 300 parts by weight of a softening agent for non-aromatic rubber, from 30 to 400 parts by weight of a propylene copolymer, which is a copolymer of propylene and one kind or two or more kinds of 1-olefin other than propylene, having a density of from 0.883 to 0.901 g/cm$^3$, and from 0 to 900 parts by weight of an inorganic filler.

Patent Document 2 discloses a production method of an elastomeric composition by kneading in advance a mixture containing 100 parts by weight of a hydrogenated derivative of a block copolymer similar to Patent Document 1, from 150 to 300 parts by weight of a softening agent for non-aromatic rubber, from 30 to 400 parts by weight of a peroxide-decomposable olefin resin, and from 0 to 900 parts by weight of an inorganic filler, and then partially crosslinking the mixture by adding an organic peroxide, a crosslinking assistant, and depending on necessity, an antioxidant, and states that the resulting elastomeric composition is rich in flexibility, is excellent in high-temperature compression set, mechanical strength, oil resistance and molding processability, and exhibits low stickiness on a surface of a molded article thereof.

Patent Document 3 discloses a block copolymer that has a molecular weight of from 3, 000 to 300,000 and is constituted by (A) a block containing a vinyl aromatic monomer and having a number average molecular weight of from 2,500 to 40,000 and (B) a block containing isoprene or a mixture of isoprene and butadiene, having a number average molecular weight of from 10,000 to 200,000, having a content of a 3, 4-bond and a 1, 2-bond of 40% or more, having a primary dispersion peak of tanδ at 0°C or higher, having carbon-carbon double bonds, at least a part of which is hydrogenated, in which the bonding form of the blocks is expressed by A-(B-A)$_n$ or (A-B)$_n$ (wherein n represents an integer of 1 or more), and a composition containing the block copolymer, and states that they are excellent in damping property, and also are excellent in heat resistance and weather resistance.

Patent Document 4 discloses a flexible composition containing 100 parts by weight of a block copolymer that has a number average molecular weight of from 30,000 to 300,000 and is constituted by (A) a block containing at least one vinyl aromatic monomer and having a number average molecular weight of from 2,500 to 40,000 and (B) a block containing isoprene, butadiene, or isoprene-butadiene, having a content of a 3,4-bond and a 1,2-bond of 30% or more, having a peak temperature of tano of -20°C or higher, and having a peak value of tanδ of 0.3 or more, or a hydrogenated product thereof, from 10 to 2,000 parts by weight of a softening agent and from 10 to 2,000 parts by weight of a tackiness imparting agent, and states that they are excellent in impact absorption.

Patent Document 5 discloses a production method of a thermoplastic elastomer composition containing heat-treating a mixture containing three components, i.e., (a) a hydrogenated product of a block copolymer, which is a hydrogenated product of a block copolymer having a weight average molecular weight of from 200,000 to 450,000, in which the proportion of a polymer having a molecular weight of 400,000 or more in the hydrogenated product of a block copolymer is 5% by weight or more, and the proportion of a polymer having a molecular weight of 200,000 or less therein is 20% by weight or less, represented by the formula A- (B-A)$_n$ or (A-B)$_n$ (wherein A represents a polymer block containing a monovinyl aromatic hydrocarbon unit, B represents a polymer block containing a conjugated diene unit, and n represents an integer of from 1 to 5), (b) a softening agent for rubber, and (c) an olefin polymer, in which the ratio (a) / (b) is from 20/80 to 80/20 (by weight), and (c) is contained in an amount of from 1 to 300 parts by weight per 100 parts by weight of the total of (a) and (b), in the presence of a cross linking agent, with a kneader, at a temperature of from 100 to 400°C. It is stated that the resulting thermoplastic elastomer composition is excellent in flexibility, rubber elasticity, weather resistance, mechanical strength and molding processability, and suffers less bleeding of the softening agent.

Patent Document 6 discloses a dynamically vulcanized hydrogenated block copolymer composition obtained by mixing from 0.5 to 30 parts by weight of a reactive alkylphenol-formaldehyde resin represented by a particular formula with 100 parts by weight of a hydrogenated block copolymer composition, which contains 100 parts by weight of a hydrogenated block copolymer obtained by hydrogenating a block copolymer containing a polymer block A mainly containing at least one vinyl aromatic compound and a polymer block B mainly containing at least one conjugated diene compound, from 20 to 500 parts by weight of a softening agent for non-aromatic rubber, from 20 to 500 parts by weight of a polyolefin resin, and from 5 to 150 parts by weight of a olefin copolymer rubber, and kneading the mixture under heat. It is stated that the hydrogenated block copolymer composition provides improved flexibility, rubber elasticity at a high temperature (compression set), high-temperature creep capability, mechanical strength, molding processability and oil resistance.

As a polymer material to be used as a medical member, such as a sealing material for medical use, materials, which are obtained by mixing a crosslinking agent, a reinforcing agent, a processing assistant and the like with butyl rubber, chlorinated butyl rubber, brominated butyl rubber, natural rubber, and synthetic rubber, such as polyisoprene rubber, polybutadiene rubber, diene polymer rubber, and olefin polymer rubber (e.g., ethylene-propylene-diene copolymer rubber), and crosslinking the mixture under high temperature and high pressure, have been generally used.

However, the materials require a process step of crosslinking and molding under high temperature and high pressure for a prolonged period of time, and are inferior in handleability and productivity. Accordingly, a thermoplastic elastomer composition that can conveniently provide a molded article by utilizing a general melt-molding technique, such as heat press molding, injection molding and extrusion molding, as similar to an ordinary thermoplastic resin, has been developed.

In particular, a hydrogenated product of a block copolymer having a polymer block mainly containing a vinyl aromatic compound and a polymer block mainly containing a conjugated diene not only is excellent in heat resistance, weather resistance, impact resistance and flexibility, but also exhibits, without vulcanization, strength and elastic characteristics that are equivalent to ordinary vulcanized rubber. Owing to the characteristics, the hydrogenated product of a block copolymer is used not only solely, but also as a thermoplastic resin composition having a thermoplastic resin, such as a polyolefin resin, and various additives, such as a softening agent, added thereto, and some of them are proposed as a medical member.

For example, Patent Document 7 discloses an infusion solution stopper, a part or the entire of which is formed of a thermoplastic elastomer composition containing 100 parts by weight of a hydrogenated derivative of a copolymer represented by the general formula A- $(B\text{-}A)_n$ (wherein A represents a polymer block containing a monovinyl-substituted aromatic hydrocarbon and having a molecular weight of from 15,000 to 60,000, B represents a polymer block containing a conjugated diene and having a molecular weight of from 60,000 to 180,000, and n represents an integer of from 1 to 5), from 100 to 185 parts by weight of a softening agent for paraffin rubber, and from 20 to 60 parts by weight of a crystalline propylene polymer resin, and having a hardness (JIS K6301) of from 30 to 60. It is stated that the infusion solution stopper is free from time course elution of a remaining solvent, an additive or the like, which occurs in ordinary vulcanized rubber, has good moldability, and is free from rinsing treatment after molding, and furthermore the infusion solution stopper is convenient for needlestick of an injection needle, and can prevent occurrence of a coring phenomenon on sticking and withdrawing an injection needle, and leakage of an infusion solution after withdrawing an injection needle.

Patent Document 8 relates to an elastomer composition which comprises:

(a) 100 parts by weight of a specific hydrogenated block copolymer mixture,
(b) 30 to 125 parts by weight of a polypropylene resin having a melt flow rate of from 5 to 100 g/10 minutes, and
(c) 0 to 50 parts by weight of a hydrocarbon oil.

Patent Document 9 relates to a hydrogenated block copolymer that is a hydrogenated material of a copolymer comprising a conjugated diene and a vinyl aromatic compound, and has certain properties which include, among others: the hydrogenated block copolymer has therein at least one of each of following polymer blocks a, b, and c:

a. a vinyl aromatic compound polymer block A,
b. a hydrogenated polymer block B of a random copolymer comprising a conjugated diene and a vinyl aromatic compound and
c. a hydrogenated polymer block C of a conjugated diene polymer having a vinyl bond content of not less than 30%.

Patent Document 10 relates to a specific flame-retardant composition comprising: a powdery acid-modified hydrogenated block copolymer (a) having a bulk density of 0.1 to 0.4 g/ml and which is a hydrogenated block copolymer modified by addition of an unsaturated carboxylic acid or a derivative thereof, wherein the hydrogenated block copolymer comprises a polymer block A composed mainly of a vinyl aromatic compound unit and a polymer block B composed mainly of a conjugated diene unit, and has a weight average molecular weight of 50,000 to 500.000. a polyolefin resin (b), a non-aromatic rubber softener (c), and a metal hydrate (d).

Patent Document 11 relates to a resin composition comprising 100 mass parts of (a) a hydrogenated block copolymer prepared by hydrogenating a block copolymer having one or more polymer blocks A mainly comprising aromatic vinyl compound and one or more polymer block mainly comprising conjugated diene compound, (b) 50 to 200 mass parts of a non-aromatic rubber-softening agent, and (c) 5 to 50 mass parts of a polyethylene resin polymerized by using a metallocene catalyst.

Patent Document 12 relates to a resin foamed product which comprises 5-50 parts by weight of a softening agent for rubber and/or liquid paraffin based on 100 parts by weight in total of a styrene-isoprene-styrene triblock copolymer of which the isoprene segment comprises a 3,4-bond in an amount of 80-95 wt% and a polyethylene-based resin in an amount of 5-20 wt%, wherein the foamed product has an extent of foaming of 10 times or more, an elastic modulus in rebound resilience of at most 10%, and a hardness of at most 30.

Patent Document 13 relates a material which comprises a high molecular organic material and a softener and has specific properties with respect to hardness, compression set and MFR. Alternatively, it comprises 100 parts by weight organic high molecular material, 50-500 parts by weight softener having a solubility parameter different from that of the organic high molecular material by 3.0 or below and 10-250 parts by weight polyphenylene ether.

Patent Document 14 relates to a specific film which is formed by at least monoaxially drawing an undrawn film formed from a resin composition which contains 5-200 parts by weight of (b) a block copolymer based on 100 parts by weight of (a) a polypropylene-based polymer, wherein the block copolymer (b) is composed of a block A consisting mainly of an aromatic vinyl compound and a block B consisting mainly of a conjugated diene-based compound. contains the block A in an amount of 5-55 wt%, and has a hydrogenation percentage of carbon-carbon double bonds of at least 50% based on the conjugated diene compound contained in the block B.

Related Art Documents

Patent Documents

Patent Document 1: JP-A-58-206644
Patent Document 2: JP-A-59-131613
Patent Document 3: JP-A-2-300218
Patent Document 4: JP-A-6-293853
Patent Document 5: JP-A-2005-281706
Patent Document 6: JP-A-63-112649
Patent Document 7: JP-A-61-37242
Patent Document 8: EP-A-0 918 070
Patent Document 9: EP-A-1 852 446
Patent Document 10: EP-A-1 932 881
Patent Document 11: JP-A-2007-091974
Patent Document 12: JP-A-2005-255830
Patent Document 13: JP-A-H09-227858
Patent Document 14: JP-A-2004-250682

Summary of the Invention

Problems to be solved by the Invention

The composition disclosed in Patent Document 1 has flexibility with a JIS A hardness of 80 or less and is well balanced in tensile strength and tensile elongation, but does not refer to transparency, damping property, molding processability, compression set at 70°C or more, oxygen gas barrier property, liquid leakage resistance (sealing property), coring resistance, and liquid leakage resistance after needlestick, and thus has room for improvement in these points.

The elastomeric composition disclosed in Patent Document 2 is excellent in compression set at 100°C for 22 hours, oil resistance and injection moldability, but is restricted in purpose, since it does not refer to visual transparency, damping property, molding processability, oxygen gas barrier property, liquid leakage resistance (sealing property), coring resistance, and liquid leakage resistance after needlestick, and thus has room for improvement in these points .

The composition containing the block copolymer disclosed in Patent Document 3 is stated to show excellent damping capability at 25°C, but does not refer to how other properties are, and thus has room for improvement in application to a wide variety of purposes.

The flexible composition disclosed in Patent Document 4 has a small value of JIS A hardness, has no rebound resilience, and thus is excellent in impact absorption with low hardness, but does not refer to compression set characteristics and retention of a softening agent at a high temperature, particularly 70°C or more, oxygen gas barrier property, liquid leakage resistance (sealing property), coring resistance, and liquid leakage resistance after needlestick, and thus has room for improvement.

The thermoplastic elastomer composition disclosed in Patent Document 5 is excellent in compression set at 70°C, 100°C and 130°C for 22 hours, and is free from deformation at a high temperature (molding strain), but does not refer to visual transparency, damping property, molding processability, oxygen gas barrier property, liquid leakage resistance (sealing property), coring resistance, and liquid leakage resistance after needlestick, and thus has room for improvement for satisfying these properties.

The molded article obtained with the thermoplastic elastomer composition disclosed in Patent Document 6 is found to be improved in such points as moldability, oil resistance, compression set at a high temperature, and the like, but the improvements are still insufficient.

The infusion solution stopper obtained with the thermoplastic elastomer composition disclosed in Patent Document 7 is found to be improved in such points as moldability, oil resistance, compression set at a high temperature, and the like, but the improvements are still insufficient, and furthermore does not refer to oxygen gas barrier property, sealing property upon use as a stopper, and the like.

Accordingly, there is still room for technical improvement upon applying these materials as they are to the purpose of a sealing material for medical use, which requires oxygen gas barrier property, liquid leakage resistance (sealing property), coring resistance, and liquid leakage resistance after needlestick.

An object of the present invention is to provide a styrene thermoplastic elastomer composition that is excellent in flexibility, molding processability, visual transparency, damping property, retention of a softening agent, and compression set at a high temperature (for example, from 70 to 120°C), and has these properties in a well balanced manner, and a molded article containing the styrene thermoplastic elastomer composition, and to provide a sealing material for medical use that contains the styrene thermoplastic elastomer composition, and is excellent in oxygen gas barrier property, liquid leakage resistance (sealing property), coring resistance, and liquid leakage resistance after needlestick.

Means for solving the Problems

The inventors have made earnest investigations for solving the problems. According to the investigations by the inventors, it has been found that the block copolymer disclosed in Patent Document 3, for example, is inferior in absorption of a softening agent, and due to the defect, cannot be applied to a field that requires flexibility and molding processability (fluidity), and thus has room for improvement.

The inventors thus have investigated suppression of the side reaction on adding and reacting a Lewis base, such as tetrahydrofuran, as a vinylating agent, for polymerizing the block (B) containing isoprene or a mixture of isoprene and butadiene, having a content of a 3,4-bond and a 1,2-bond of 40% or more. As a result, it has been found that there is such a limitation that, due to the presence of the vinylating agent, stabilization of the polymerization end on anion polymerization, which is referred to as back biting, occurs on polymerization of the conjugated diene, such as isoprene, which actually increases the molecular weight of the block copolymer.

The inventors have found by their investigations that the problem may be solved in such a manner that in the copolymerization, the feeding rate of the conjugated diene, such as isoprene, is strictly controlled, and the polymerization temperature is precisely controlled, and furthermore the impurities contained in a slight amount in the vinylating agent and the conjugated diene are thoroughly removed. As a result, in the block copolymer disclosed in Patent Document 3, the polymerization degree of the block B is particularly increased higher than the range disclosed in Patent Document 3, thereby providing a block copolymer having a large molecular weight. It has also been found that the block copolymer having a large molecular weight can be obtained in the form of powder having a particular bulk density, by the method described later, and it has been confirmed that the copolymer in the form of powder is excellent in absorption of a softening agent.

The present invention has been accomplished based on the knowledge, and it has been found that the problems are solved by adding a softening agent and a polyolefin resin in particular proportions to a hydrogenated product of the block copolymer having a particular molecular weight and a particular structure.

The present invention relates to the following items (1) to (6) .

1. A sealing material for medical use comprising a thermoplastic elastomer composition which comprises:

> 100 parts by mass of (a) a hydrogenated block copolymer that is a hydrogenated product of a block copolymer containing (A) a polymer block containing a structural unit derived from an aromatic vinyl compound and (B) a polymer block containing a structural unit derived from isoprene or a mixture of isoprene and butadiene, and having a total content of a 3,4-bond unit and a 1, 2-bond unit of 45% or more, wherein block copolymer (a) has a peak top molecular weight (Mp) obtained by gel permeation chromatograph in terms of polystyrene standard of from 250,000 to 500,000, and is in a form of powder having a bulk density of from 0.10 to 0.40 g/mL;
> from 10 to 300 parts by mass of (b) a softening agent; and
> from 5 to 200 parts by mass of (c) a polyolefin resin.

2. The sealing material according to item 1, wherein the structural unit derived from isopreneor a mixture of isoprene and butadiene is a structural unit derived from isoprene.

3. The sealing material according to item 2, wherein the total content of a 3,4-bond unit and a 1,2-bond unit in polymer block (B) is 53 % or more.

4. The sealing material according to item 2 or 3, wherein the total content of a 3,4-bond unit and a 1,2-bond unit in polymer block (B) is 95 % or less.

5. Use of a thermoplastic elastomer composition for a member for sealing a content in the medical field, wherein thermoplastic elastomer composition comprises:

> 100 parts by mass of (a) a hydrogenated block copolymer that is a hydrogenated product of a block copolymer containing (A) a polymer block containing a structural unit derived from an aromatic vinyl compound and (B) a polymer block containing a structural unit derived from isoprene or a mixture of isoprene and butadiene, and having a total content of a 3,4 bond unit and a 1,2 bond unit of 45% or more, wherein block copolymer (a) has a peak top molecular weight (Mp) obtained by gel permeation chromatograph in terms of polystyrene standard of from 250,000 to 500,000, and is in a form of powder having a bulk density of from 0.10 to 0.40 g/mL;
> from 10 to 300 parts by mass of (b) a softening agent; and
> from 5 to 200 parts by mass of (c) a polyolefin resin.

Use according to item 5, wherein the member is selected from a stopper for a container storing a medical drug as a content, a sealing material for connecting portion of an infusion system in an infusion bag, a stopper for an infusion solution, a sealing material and a packing material for a vacuum blood collection tube, and a gasket for a syringe.

Advantages of the Invention

According to the present invention, a styrene thermoplastic elastomer composition can be provided that is excellent in flexibility, molding processability, visual transparency, damping property, retention of a softening agent, and compression set at a high temperature (for example, from 70 to 120°C), and has these properties in a well balanced manner According to the invention, this elastomer composition is either comprised in a sealing material for medical use or it is used for a member for sealing a content in the medical field. This sealing material for medical use which contains the styrene thermoplastic elastomer composition is excellent in oxygen gas barrier property, liquid leakage resistance (sealing property), coring resistance, and liquid leakage resistance after needlestick.

Embodiments for carrying out the Invention

Styrene Thermoplastic Elastomer Composition

The thermoplastic elastomer composition used in the present invention contains 100 parts by mass of the particular hydrogenated block copolymer (a) described later, from 10 to 300 parts by mass of the softening agent (b), and from 5 to 200 parts by mass of the polyolefin resin (c). The components will be described in detail below.

Hydrogenated Block Copolymer (a)

The hydrogenated block copolymer (a) used in the present invention is a hydrogenated product of a block copolymer containing (A) a polymer block containing a structural unit derived from an aromatic vinyl compound and (B) a polymer block containing a structural unit derived from isoprene or a mixture of isoprene and butadiene, having a total content of a 3, 4-bond unit and a 1,2-bond unit (a total vinyl bond content) of 45% or more, and the hydrogenated block copolymer (a) has a peak top molecular weight (Mp) obtained by gel permeation chromatograph in terms of polystyrene standard of from 250,000 to 500,000, and is in a form of powder having a bulk density of from 0.10 to 0.40 g/mL.

A 3, 4-bond unit and a 1, 2-bond unit in a structural unit derived from isoprene and a 1, 2-bond unit in a structural unit derived from butadiene herein are referred to as "vinyl bond units" , and the total content thereof is referred to as a "vinyl bond content".

The polymer block (A) of the hydrogenated block copolymer (a) mainly contains a structural unit derived from an aromatic vinyl compound (i.e., an aromatic vinyl compound unit). The term "mainly" herein means that the amount of the aromatic vinyl compound unit is preferably 90% by mass or more, more preferably 95% by mass or more, and further preferably 100% by mass, based on the mass of the polymer block (A).

Examples of the aromatic vinyl compound constituting the polymer block (A) include styrene, $\alpha$-methylstyrene, $\beta$-methylstyrene, o-methylstyrene, m-methylstyrene, p-methylstyrene, 4-t-butylstyrene, 2,4-dimethylstyrene, 2,4,6-trimethylstyrene, monofluorostyrene, difluorostyrene, monochlorostyrene, dichlorostyrene, methoxystyrene, vinylnaphthalene and vinylanthracene.

The polymer block (A) may contain a structural unit derived only from one kind of the aromatic vinyl compound and may contain structural units derived from two or more kinds thereof. Among these, the polymer block (A) is preferably constituted mainly from a structural unit derived from styrene. The term "mainly" herein means that the amount of the structural unit derived from styrene is preferably 90% by mass or more, more preferably 95% by mass or more, and further preferably 100% by mass, based on the mass of the polymer block (A).

The polymer block (A) may contain, in addition to the structural unit derived from the aromatic vinyl compound, a small amount of a structural unit derived from other copolymerizable monomers. In this case, the proportion of the structural unit derived from other copolymerizable monomers is preferably 10% by mass or less, and more preferably 5% by mass or less, based on the mass of the polymer block (A). Examples of the other copolymerizable monomers include copolymerizable monomers capable of undergoing ionic polymerization, such as 1-butene, pentene, hexene, butadiene, isoprene and methyl vinyl ether. In the case where the structural unit derived from the aromatic vinyl compound and the structural unit derived from the other copolymerizable monomers are contained, the bonding mode thereof may be any of a random mode, a tapered mode and the like.

The polymer block (B) of the hydrogenated block copolymer (a) mainly contains a structural unit derived from isoprene solely or a mixture of isoprene and butadiene. The term "mainly" herein means that the amount of the structural unit derived from isoprene solely or a mixture of isoprene and butadiene is preferably 90% by mass or more, more preferably 95% by mass or more, and further preferably 100% by mass, based on the mass of the polymer block (B).

The increase of the content of the 1,2-bond unit in structural units derived from other conjugated dienes than isoprene solely or a mixture of isoprene and butadiene, for example, in structural units derived from butadiene solely, fails to improve the visual transparency, damping property, molding processability, and compression set at a high temperature, and also fails to improve the oxygen gas barrier property, liquid leakage resistance (sealing property), coring resistance, and liquid leakage resistance after needlestick, and therefore, it has less practical significance.

In the case where the polymer block (B) mainly contains the structural unit derived from isoprene solely, the structural units contain a 2-methyl-2-buten-1,4-diyl group ($-CH_2-C(CH_3)=CH-CH_2-$, i.e., the 1,4-bond unit), an isoprope-nylethylene group ($-CH(C(CH_3)=CH_2)-CH_2-$, i.e., the 3,4-bond unit), and a 1-methyl-2-vinylethylene group ($-C(CH_3)(CH=CH_2)-CH_2-$, i.e., the 1,2-bond unit). In the present invention, it is necessary that the vinyl bond content in the total structural units of the polymer block (B) is 45% or more. The vinyl bond content is preferably 47% or more, more preferably 50% or more, and further preferably 53% or more. The upper limit of the vinyl bond content is not particularly limited, and in general is preferably 95% or less, more preferably 90% or less, further preferably 80% or less, and particularly preferably 70% or less. In consideration of the above, the vinyl bond content is preferably from 47 to 90%, more preferably from 50 to 90%, further preferably from 50 to 80%, still further preferably from 50 to 70%, still further preferably from 53 to 90%, still further preferably from 53 to 80%, and still further preferably from 53 to 70%.

When the vinyl bond content is in the range, the thermoplastic elastomer composition containing the hydrogenated block copolymer (a), the particular softening agent (b) and the particular amount of the polyolefin resin (c) may be excellent in molding processability (fluidity), and a molded article obtained from the thermoplastic elastomer composition may be enhanced in oxygen gas barrier property, liquid leakage resistance (sealing property), coring resistance, and liquid leakage resistance after needlestick.

The vinyl bond content referred herein is a value obtained by measurement of $^1$H-NMR spectrum according to the method described for the examples.

In the case where the polymer block (B) mainly contains the structural unit derived from a mixture of isoprene and butadiene, the structural units thereof contain a 2-methyl-2-buten-1,4-diyl group, an isopropenylethylene group and a 1-methyl-1-vinylethylene group derived from isoprene, and a 2-buten-1,4-diyl group ($-CH_2-CH=CH-CH_2-$, i.e., the 1, 4-bond unit) and a vinylethylene group ($-CH(CH=CH_2)-CH_2-$, i.e., the 1,2-bond unit) derived from butadiene. In the present invention, it is necessary that the vinyl bond content in the total structural units of the polymer block (B) is 45% or more. The vinyl bond content is preferably 47% or more, more preferably 50% or more, and further preferably 53% or more. The upper limit of the vinyl bond content is not particularly limited, and in general is preferably 95% or less, more preferably 90% or less, further preferably 80% or less, and particularly preferably 70% or less. In consideration of the above, the vinyl bond content is preferably from 47 to 90%, more preferably from 50 to 90%, further preferably from 50 to 80%, still further preferably from 50 to 70%, still further preferably from 53 to 90%, still further preferably from 53 to 80%, and still further preferably from 53 to 70%.

In the copolymer block, the bonding mode of the structural unit derived from isoprene and the structural unit derived from butadiene may be any of a random mode, a block mode and a tapered mode.

In the case where the polymer block (3) contains the structural unit derived from a mixture of isoprene and butadiene, the proportion of the isoprene unit based on the total of the isoprene unit and the butadiene unit is preferably 10% by mol or more, more preferably 30% by mol or more, and further preferably 40% by mol or more, from the standpoint of maintaining excellent the transparency, damping property and molding processability of the thermoplastic elastomer composition used in the present invention and the oxygen gas barrier property, liquid leakage resistance (sealing property), coring resistance, and liquid leakage resistance after needlestick of the molded article.

The polymer block (B) may contain, in addition to the structural unit derived from isoprene or a mixture of isoprene and butadiene, a small amount of a structural unit derived from other copolymerizable monomers within the range not impairing the purpose of the invention. In this case, the proportion of the structural unit derived from other copolymerizable monomers is preferably 30% by mass or less, more preferably 10% by mass or less, and further preferably 5% by mass or less, based on the mass of the polymer block (B). Examples of the other copolymerizable monomers include copolymerizable monomers capable of undergoing anion polymerization, such as an aromatic vinyl compound, e.g., styrene, $\alpha$-methylstyrene, o-methylstyrene, m-methylstyrene, p-methylstyrene, 1,3-dimethylstyrene, diphenylethylene, 1-vinylnaphthalene, 4-propylstyrene, 4-cyclohexylstyrene, 4-dodecylstyrene, 2-ethyl-4-benzylstyrene and 4-(phenylbutyl)styrene. These other copolymerizable monomers may be used solely or as a combination of two or more kinds thereof. In the case where the polymer block (B) contains the structural unit derived from the other copolymerizable monomers in addition to the structural unit derived from isoprene or a mixture of isoprene and butadiene, the bonding mode thereof may be any of a random mode, a tapered mode and the like.

In the hydrogenated block copolymer (a) used in the present invention, the unsaturated double bonds (i.e., carbon-carbon double bonds) in the polymer block (B) are entirely or partially hydrogenated for providing favorable heat resistance and weather resistance therefor. In this case, the hydrogenation degree of the polymer block (B) is preferably 50% by mol or more, more preferably 60% by mol or more, further preferably 70% by mol or more, still further preferably 80% by mol or more, and particularly preferably 90% by mol or more. The hydrogenation degree referred herein may also be referred to as a "hydrogenation degree of the hydrogenated block copolymer (a)".

The hydrogenation degree of the unsaturated double bonds in the polymer block (B) herein is a value obtained in such a manner as described for the examples that the content of the unsaturated double bonds in the polymer block (B) is measured with a nuclear magnetic resonance spectrometer ($^1$H-NMR) before and after hydrogenation, and the hydrogenation degree is obtained from the measured values.

The hydrogenated block copolymer (a) may have one kind or two or more kinds of functional groups, such as a carboxyl group, a hydroxyl group, an acid anhydride group, an amino group and an epoxy group, in some cases, within the molecular chain and/or at the molecular ends, unless the advantages of the present invention are considerably impaired.

The hydrogenated block copolymer (a) is a hydrogenated product of a block copolymer that contains at least one block of each of the polymer block (A) and the polymer block (B). The hydrogenated block copolymer (a) is preferably a hydrogenated product of a block copolymer that contains at least two blocks of the polymer blocks (A) and at least one block of the polymer block (B). The bonding mode of the polymer block (A) and the polymer block (B) is not particularly limited, and may be any of linear, branched, radial and combined bonding modes including two or more thereof. The bonding mode is preferably, a linear bonding mode, and is preferably bonding modes represented by $(A-B)_l$, $A-(B-A)_m$ and $B-(A-B)_n$ (wherein A represents the polymer block (A); B represents the polymer block (B); and l, m and n each independently represent an integer of 1 or more), and from the standpoint of the rubber elasticity, the mechanical characteristics, the handleability and the like, the bonding mode is more preferably a bonding mode represented by $(A-B)_l$ or $A-(B-A)_m$, and further preferably a di-block structure represented by A-B or a tri-block structure represented by A-B-A.

In the case where the hydrogenated block copolymer (a) contains two or more blocks of the polymer blocks (A) or two or more blocks of the polymer block (B), the plural polymer blocks (A) or polymer blocks (B) may be blocks having the same structure or blocks having different structures. For example, in the two polymer blocks (A) in the tri-block structure represented by A-B-A, the aromatic vinyl compounds constituting them may be the same as or different from each other.

The content of the polymer block (A) in the hydrogenated block copolymer (a) is preferably from 5 to 70% by mass, more preferably from 15 to 50% by mass, and further preferably from 15 to 35% by mass, based on the hydrogenated block copolymer (a). When the content of the polymer block (A) is in the range, the resulting thermoplastic elastomer composition may be excellent in rubber elasticity and flexibility. The content of the polymer block (A) in the hydrogenated block copolymer (a) herein is a value obtained according to the method described for the examples.

In the hydrogenated block copolymer (a), the peak top molecular weight of the polymer block (A) is preferably from 10,000 to 60,000, more preferably from 15,000 to 45,000, and further preferably from 30,000 to 40,000, and the peak top molecular weight of the polymer block (B) before hydrogenation is preferably from 130,000 to 450,000, and more preferably from 180,000 to 430,000.

The peak top molecular weight (Mp) of the total hydrogenated block copolymer (a) after hydrogenation is 250,000 to 500,000, preferably from 280,000 to 500,000, more preferably from 300,000 to 500,000, further preferably from 310,000 to 500,000, still further preferably from 310,000 to 400, 000, and particularly preferably from 310,000 to 350,000. When the peak top molecular weight (Mp) of the hydrogenated block copolymer (a) is in the range, the hydrogenated block copolymer (a) that is in the form of powder having a bulk density of from 0.10 to 0.40 g/mL may be easily obtained, and the block copolymer (a) may be excellent in absorption of the softening agent (b). Furthermore, the resulting thermoplastic elastomer composition may be excellent in compression set at a high temperature and retention of the softening agent (b).

The peak top molecular weight (Mp) referred herein is a value obtained by a gel permeation chromatography (GPC) method in terms of polystyrene standard, as described in the examples.

It is important that the hydrogenated block copolymer (a) is in the form of powder having a bulk density of from 0.10 to 0.40 g/mL from the standpoint of absorption of the softening agent (b), and the bulk density is more preferably from 0.15 to 0.35 g/mL. When the bulk density is less than 0.10 g/mL, the handleability may be deteriorated, and when it exceeds 0.40 g/mL, the absorption of the softening agent (b) may be deteriorated, and the intended properties and characteristics may not be obtained. The bulk density referred herein is a value obtained in such a manner that the hydrogenated block copolymer (a) in the form of powder is weighed and placed in a measuring cylinder for measuring the volume, and the mass of the hydrogenated block copolymer (a) is divided by the volume to provide the bulk density, as described in the examples.

Production Method of Hydrogenated Block Copolymer (a)

Examples of the production method of the hydrogenated block copolymer (a) include an ionic polymerization method, such as anionic polymerization and cationic polymerization, a single site polymerization method, and a radical polymerization method. In the case where an anionic polymerization method is employed, for example, an aromatic vinyl compound and isoprene (or a mixture of isoprene and butadiene) are sequentially polymerized in an organic solvent that is inert to the polymerization reaction, such as n-hexane or cyclohexane, with an alkyl lithium compound or the like used as a polymerization initiator, thereby producing a block copolymer having the intended molecular structure and molecular weight, and then the polymerization is terminated by adding an active hydrogen compound, such as an alcohol, a carboxylic acid or water, thereby producing the block copolymer. The polymerization is performed generally at a temperature of from 0 to 80°C for a period of from 0.5 to 50 hours.

After isolating the resulting block copolymer, or preferably not isolating the block copolymer, the hydrogenation reaction is subsequently performed in the presence of a hydrogenation catalyst in an organic solvent that is inert to the polymerization reaction, thereby providing the hydrogenated block copolymer (a).

Examples of the alkyl lithium compound as the polymerization initiator include an alkyl lithium compound having an alkyl residual group containing from 1 to 10 carbon atoms, and preferred examples thereof include methyl lithium, ethyl lithium, butyl lithium and pentyl lithium. The amount of the initiator used, such as the alkyl lithium compounds, may be determined depending on the peak top molecular weight (Mp) of the target hydrogenated block copolymer (a), and is preferably approximately from 0.01 to 0.2 part by mass per 100 parts by mass of the total monomers to be polymerized.

In order that the structural unit derived from isoprene or a mixture of isoprene and butadiene in the polymer block (B) of the hydrogenated block copolymer (a) has a vinyl bond content of 45% or more, a Lewis base may be used as a co-catalyst on polymerization. Examples of the Lewis base include an ether compound, such as dimethyl ether, diethyl ether, tetrahydrofuran (THF) and dioxane; an glycol ether compound, such as ethylene glycol dimethyl ether and diethylene glycol dimethyl ether; an amine compound, such as triethylamine, N,N,N',N'-tetramethylethylenediamine (TMEDA) and N-methylmorpholine; a nitrogen-containing heterocyclic aromatic compound, such as pyridine; a sulfoxide, such as dimethylsulfoxide; and a ketone, such as acetone and methyl ethyl ketone. The Lewis bases may be used solely or as a combination of two or more kinds thereof. Among these, the Lewis base is preferably an ether compound and an amine compound, and more preferably THF and TMEDA.

The amount of the Lewis base used is preferably approximately from 0.1 to 1,000 mol, more preferably from 0.1 to 100 mol, and further preferably from 1 to 100 mol, per 1 mol of lithium atoms of the alkyl lithium compound. The amount may be appropriately controlled within the range, thereby controlling the vinyl bond content arbitrarily.

As the hydrogenation reaction, such a method may be preferably employed that the block copolymer before hydrogenation is dissolved in an organic solvent that is inert to the reaction and the hydrogenation catalyst, such as n-hexane or cyclohexane, and molecular hydrogen is reacted therewith in the presence of the hydrogenation catalyst. Examples of the hydrogenation catalyst used include Raney nickel; a heterogeneous catalyst containing a metal, such as Pt, Pd, Ru, Rh or Ni, carried on a carrier, such as carbon, alumina or diatom earth; a Ziegler catalyst, such as a combination of a transition metal compound with an alkyl aluminum compound or an alkyl lithium compound; and a metallocene catalyst. The reaction may be performed under conditions of a hydrogen pressure of preferably from 0.1 to 20 MPa, and more preferably from 0.1 to 10 MPa, and a temperature of preferably from 20 to 250°C, more preferably from 50 to 200°C, and more preferably from 100 to 200°C, for a period of preferably from 0.1 to 100 hours.

The hydrogenated block copolymer (a) in the form of powder having a bulk density of from 0.10 to 0.40 g/mL specified in the present invention may be produced, for example, in the following manner. The reaction solution, from which the hydrogenation catalyst has been removed by filtration after completing the hydrogenation reaction, is heated to preferably from 40 to 150°C, and more preferably from 60 to 150°C, and depending on necessity mixed with a surfactant, such as a fatty acid salt or a polyoxyalkylene derivative, and is then fed to a hot water at a temperature of from 80 to 130°C at a rate of 100 parts by mass per hour, and simultaneously steam of 1 MPa is fed thereto at a rate of from 40 to 60 parts by mass per hour. Steam stripping is performed at a temperature of from the boiling point of the inert organic solvent, such as a saturated hydrocarbon, or in the case where the inert organic solvent and water undergo azeotropy, from the azeotropic temperature, to 150°C, and then the copolymer is dehydrated with a compression dehydrator to a water content of 55% by mass or less, and preferably 45% by mass or less (wet basis (WB), hereinafter the same), and then dried at a temperature of from 60 to 100°C with a screw extrusion dryer, an expander drier, a heat conduction dryer, a hot air dryer or the like, thereby producing the target hydrogenated block copolymer (a) in the form of powder having a water content of 0.1% by mass or less.

Softening Agent (b)

The thermoplastic elastomer composition used in the present invention contains (b) a softening agent for providing flexibility, molding processability and the like. Examples of the softening agent (b) include a process oil of paraffin series, naphthene series or aromatic series; a phthalic acid derivative, such as dioctyl phthalate and dibutyl phthalate; a white oil; a mineral oil; a liquid oligomer of ethylene and an $\alpha$-olefin; liquid paraffin; polybutene; low molecular weight polyisobutylene (having a peak top molecular weight of approximately from 400 to 90, 000) ; and a liquid polydiene, such as liquid polybutadiene, liquid polyisoprene, a liquid poly(isoprene-butadiene) copolymer, a liquid poly(styrene-butadiene) copolymer and a liquid poly(styrene-isoprene) copolymer, and a hydrogenated product thereof. These materials may be used solely or as a combination of two or more kinds thereof.

Among these, a paraffin series process oil; a liquid oligomer of ethylene and an $\alpha$-olefin; liquid paraffin; low molecular weight polyisobutylene (having a peak top molecular weight of approximately from 5,000 to 80,000); and a liquid polydiene and a hydrogenated product thereof are preferred from the standpoint of compatibility with the hydrogenated block copolymer (a). Among these, a liquid polydiene (particularly a liquid poly (styrene-isoprene) copolymer) and a hydrogenated product thereof, and a low molecular weight polyisobutylene are further excellent in enhancing the oxygen gas barrier property of the molded article, and a paraffin series process oil is further excellent in improving the compression set at a high temperature thereof.

The content of the softening agent (b) is from 10 to 300 parts by mass per 100 parts by mass of the hydrogenated block copolymer (a), and is preferably from 30 to 300 parts by mass, more preferably from 50 to 300 parts by mass, and further preferably from 50 to 270 parts by mass, from the standpoint of the molding processability.

Polyolefin Resin (c)

The thermoplastic elastomer composition used in the present invention contains (c) a polyolefin resin from the standpoint of enhancing the moldability and the like. Examples of the polyolefin resin (c) include polyethylene, such as high density polyethylene, medium density polyethylene, low density polyethylene and linear low density polyethylene, a homopolymer of propylene, such as homopolypropylene, a block copolymer of propylene and ethylene (block polypropylene), a random copolymer of propylene and ethylene (random polypropylene), and a copolymer of propylene or ethylene and an $\alpha$-olefin. Examples of the $\alpha$-olefin include an $\alpha$-olefin having 20 or less carbon atoms, such as 1-butene, 1-pentene, 3-methyl-1-butene, 1-hexene, 3-methyl-1-pentene, 4-methyl-1-pentene, 1-heptene, 1-octene, 1-nonene, 1-decene, 1-dodecene, 1-tetradecene, 1-hexadecene, 1-octadecene and 1-eicosene, which may be used solely or as a combination of two or more kinds thereof.

Among the polyolefin resins (c) above, homopolypropylene, block polypropylene and random polypropylene are preferred from the standpoint of the moldability of the resulting thermoplastic elastomer composition. Furthermore, homopolypropylene and block polypropylene are preferred from the standpoint of the flexibility thereof, and homopolypropylene and random polypropylene are preferred from the standpoint of the transparency thereof.

The content of the polyolefin resin (c) is from 5 to 200 parts by mass per 100 parts by mass of the hydrogenated block copolymer (a), and is preferably from 10 to 180 parts by mass, more preferably from 20 to 150 parts by mass, and further preferably from 20 to 120 parts by mass. When the content of the polyolefin resin (c) is less than 5 parts by mass, the mechanical strength of the resulting thermoplastic elastomer composition may be lowered, and when it exceeds 200 parts by mass, the hardness of the resulting thermoplastic elastomer composition may be increased to deteriorate the flexibility, and furthermore the compression set at a high temperature thereof may be deteriorated.

Additives

The thermoplastic elastomer composition used in the present invention may contain various additives depending on necessity in such a range that does not considerably impair the advantages of the present invention. Examples of the additives include a lubricant, an antioxidant, a heat stabilizer, a light resisting agent, a weather resisting agent, a metal inactivator, an ultraviolet ray absorbent, a light stabilizer, a copper inhibitor, a filler, a reinforcing agent, an antistatic agent, an antimicrobial agent, an antifungal agent, a dispersant, a colorant, a rubber, such as an isobutylene-isoprene copolymer and a silicone rubber, and a thermoplastic resin, such as an ethylene-vinyl acetate copolymer and an ABS resin.

Among these, a lubricant has a function of enhancing the molding processability of the thermoplastic elastomer composition used in the present invention, and preventing heat deterioration thereof. Examples of the lubricant that may be used in the present invention include a silicone oil, a hydrocarbon lubricant, such as paraffin wax, micro wax and polyethylene wax, butyl stearate, stearic acid monoglyceride, pentaerythritol tetrastearate and stearyl stearate.

Examples of the filler include calcium carbonate, talc, carbon black, titanium oxide, silica, clay, barium sulfate, magnesium carbonate, glass fibers and carbon fibers.

Other Additives: Crosslinking Agent and Crosslinking Assistant

The thermoplastic elastomer composition used in the present invention may be crosslinked unless exhibition of the intended advantages is inhibited. Upon crosslinking, a radical generator, a crosslinking agent, such as sulfur and a sulfur compound, and depending on necessity, a crosslinking assistant are added to the thermoplastic elastomer composition, which is the kneaded. Examples of other crosslinking methods include a resin crosslinking method, a quinoid crosslinking method, and a method using an active energy ray.

Examples of the radical generator include a hydroperoxide, such as t-butyl hydroperoxide, cumene hydroperoxide and 2, 5-dimethylhexane-2, 5-dihydroperoxide; a dialkyl peroxide, such as di-t-butyl peroxide, t-butyl cumyl peroxide, dicumyl peroxide, $\alpha,\alpha'$-bis(t-butylperoxy)-p-diisopropylbenzene, 2,5-dimethyl-2,5-di(t-butylperoxy)hexane and 2,5-dimethyl-2,5-di(t-butylperoxy)hexyne-3; a diacyl peroxide, such as acetyl peroxide, succinic acid peroxide and benzoyl peroxide; an ester peroxide, such as t-butyl peroxyacetate, t-butyl peroxyisobutyrate and t-butyl peroxyisopropyl carbonate; an organic peroxide, such as a ketone peroxide, e.g., methyl ethyl ketone peroxide and cyclohexanone peroxide; an inorganic peroxide, such as hydrogen peroxide, a persulfate salt and a metal oxide; an azo compound, a mono- or disulfide; a metal chelate; and a redox initiator. These materials may be used solely or as a combination of two or more kinds thereof.

In the case where the radical generator is used, the amount thereof is preferably from 0.01 to 15 parts by mass, and more preferably from 0.05 to 10 parts by mass, per 100 parts by mass of the hydrogenated block copolymer (a).

Examples of the crosslinking method using a radical generator include a method of melt-kneading under heat the thermoplastic elastomer composition, a radical generator, and depending on necessity another thermoplastic resin. The heating temperature is preferably from 140 to 230°C, and the melt-kneading process may be performed by a batch method or a continuous method with an apparatus, examples of which include an extruder, a kneader, rolls, and Plastograph. The crosslinking reaction may proceed through the melt-kneading process.

Examples of the sulfur compound include a sulfur monochloride and sulfur dichloride. In the case where sulfur or the sulfur compound is used, the amount thereof is preferably from 0.1 to 20 parts by mass, and more preferably from 0.2 to 10 parts by mass, per 100 parts by mass of the hydrogenated block copolymer (a). In the case where crosslinking is performed by using sulfur or the sulfur compound, it is considerably preferred to use a vulcanization accelerator in combination.

Examples of the vulcanization accelerator include a thiazole compound, such as N,N-diisopropyl-2-benzothiazole sulfenamide, 2-mercaptobanzothiazole and 2-(4-morphlinodithio)benzothiazole; a guanidine compound, such as diphenylguanidine and triphenylguanidine; an aldehyde-amine reaction product or an aldehyde-ammonia reaction product, such as a butylaldehyde-aniline reaction product and a hexamethylenetetramine-acetaldehyde reaction product; an imidazoline compound, such as 2-mercaptoimidazoline; a thiourea compound, such as thiocarbanilide, diethylurea, dibutylthiourea, trimethylthiourea and di-o-tolylthiourea; a thiuram monosulfide or thiuram polysulfide compound, such as tetramethyl thiuram monosulfide, tetramethyl thiuram disulfide and pentamethylene thiuram tetrasulfide; a thiocarbamiate salt, such as zinc dimethyldithiocarbamate, zinc ethylphenyldithiocarbamate, sodium dimethyldithiocarbamate, selenium dimethyldithiocarbamate and tellurium diethyldithiocarbamate; a xanthogenate salt, such as zinc dibutylxanthogenate; an organic peroxide; and zinc flower. These vulcanization accelerators may be used solely or as a combination of two or more kinds thereof.

In the case where the vulcanization accelerator is used, the amount thereof is preferably from 0.05 to 30 parts by mass, more preferably from 0.1 to 20 parts by mass, and further preferably from 0.2 to 10 parts by mass, per 100 parts by mass of the hydrogenated block copolymer (a).

Examples of the crosslinking method using sulfur include a method of crosslinking by kneading the thermoplastic elastomer composition, sulfur or a sulfur compound, a vulcanization accelerator, and depending on necessity, another thermoplastic resin by using a mixer, such as rolls or a Banbury mixer, at a temperature of preferably from 50 to 250°C, and more preferably from 80 to 200°C, and then maintaining at a temperature of preferably from 60°C or more, and more preferably from 90 to 250°C, for a period of generally preferably from 1 minute to 2 hours, and more preferably from 5 minutes to 1 hour.

In the crosslinking method using a crosslinking resin, a phenol resin, such as an alkylphenol resin and a brominated alkylphenol resin, is used as a crosslinking agent, and a crosslinking catalyst, such as stannous chloride, stannic chloride, an organic sulfonic acid, polychloroprene and chlorosulfonated polyethylene, is used in combination. In the case where this crosslinking method is employed, the amount of the phenol resin added as a crosslinking agent is preferably from 1 to 30 parts by mass, and more preferably from 5 to 20 parts by mass, per 100 parts by mass of the hydrogenated block copolymer (a). The amount of the crosslinking catalyst added is preferably from 0.1 to 10 parts by mass, and more preferably from 0.5 to 5 parts by mass. The crosslinking temperature is preferably from 100 to 250°C, and more preferably from 130 to 220°C.

In the crosslinking method by quinoid crosslinking, a combination of p-quinonedioxime and lead dioxide, a combination of p,p'-dibenzoylquinonedioxime and trilead tetraoxide, or the like is used as a crosslinking agent. In the case where this crosslinking method is employed, the quinonedioxime compound is added in an amount of preferably from 0.1 to 10 parts by mass, and more preferably from 0.5 to 5 parts by mass, and the lead oxide compound is added in an amount of preferably from 0.1 to 15 parts by mass, and more preferably from 0.5 to 10 parts by mass, per 100 parts by mass of the hydrogenated block copolymer (a). The crosslinking temperature is preferably from 90 to 250°C, and more preferably from 110 to 220°C.

In the crosslinking method using an active energy ray, examples of the active energy ray used include such radiation rays as an $\alpha$ ray, a $\beta$ ray, a $\gamma$ ray, an X ray, an electron beam, a proton beam, a neutron beam and an ultraviolet ray (UV), and a $\gamma$ ray and an electron beam are preferred, with an electron beam being more preferred. The radiation rays may be used in combination. The radiation conditions on radiating an electron beam are not particularly limited, and the acceleration energy is generally preferably 150 keV or more, and more preferably 300 keV or more, and the radiation dose is generally preferably from 20 to 600 kGy, more preferably from 100 to 600 kGy, and further preferably from 200 to 450 kGy. The radiation operation is preferably performed in an inert gas atmosphere, such as nitrogen or argon, or in vacuum. Upon crosslinking with an active energy ray, an organic peroxide, sulfur or a sulfur compound, and a vulcanization accelerator may be used in combination.

Other Additives: Tackifier

The thermoplastic elastomer composition used in the present invention may be, depending on necessity, a thermoplastic elastomer composition that contains a tackifier in such a range that does not the advantages of the present invention are not considerably impaired. The tackifier used may be any material that has been used as a tackifier, without particular limitation. Examples thereof include a rosin resin, such as gum rosin, tall oil rosin, wood rosin, hydrogenated rosin, disproportionated rosin, polymerized rosin, and rosin esters, e.g., glycerin esters and pentaerythritol esters thereof; a terpene resin, such as a terpene resin mainly containing $\alpha$-pinene, $\beta$-pinene, dipentene or the like, an aromatic-modified terpene resin, a hydrogenated terpene resin and a terpene phenol resin; a petroleum resin, which may be hydrogenated, such as a (hydrogenated) aliphatic (C5 series) petroleum resin, a (hydrogenated) aromatic (C9 series) petroleum resin, a (hydrogenated) copolymer (C5-C9 copolymer series) petroleum resin, a (hydrogenated) dicyclopentadiene petroleum resin and an alicyclic saturated hydrocarbon resin; a styrene resin, such as poly-$\alpha$-methylstyrene, an $\alpha$-methylstyrene-styrene copolymer, a styrene monomer-aliphatic monomer copolymer, a styrene monomer-$\alpha$-methylstyrene-aliphatic monomer copolymer, and a styrene monomer-aromatic monomer (excluding a styrene monomer) copolymer; a phenol resin; a xylene resin; and synthetic resins, such as a coumarone-indene resin. Among these, a hydrogenated terpene resin, an alicyclic saturated hydrocarbon resin and a (hydrogenated) aliphatic (C5 series) petroleum resin are preferred from the standpoint of prevention of coloration of the thermoplastic elastomer composition. These materials may be used solely or as a combination of two or more kinds thereof.

In the case where the thermoplastic resin composition used in the present invention contains the tackifier, the amount thereof is preferably 100 parts by mass or less per 100 parts by mass of the hydrogenated block copolymer (a), and is more preferably 80 parts by mass or less, more preferably 70 parts by mass or less, and particularly preferably 50 parts by mass or less, from the standpoint of the heat resistance. The softening point of the tackifier is preferably from 50 to 150°C, and more preferably from 100 to 150°C, from the standpoint of the heat resistance.

The production method of the thermoplastic elastomer composition used in the present invention is not particularly limited, and examples thereof include (i) a method of preliminarily mixing the hydrogenated block copolymer (a), the softening agent (b), the polyolefin resin (c), and depending on necessity, the additives, and then melt-kneading them with an extruder, such as a single screw extruder, a multi-screw extruder, a Banbury mixer, a Brabender mixer, open rolls and a kneader, or a kneading machine, and (ii) a method of feeding the hydrogenated block copolymer (a), the softening agent (b), the polyolefin resin (c), and depending on necessity, the additives, from the separate charging ports of the aforementioned extruder or kneader, and melt-kneading them therein.

Examples of the method of preliminarily mixing include methods of using mixers, such as a Henschel mixer, a high-speed mixer, a V-blender, a ribbon blender, a tumble mixer and a conical blender.

Properties and Characteristics of Thermoplastic Elastomer Composition

The thermoplastic elastomer composition used in the present invention thus obtained may have a melt flow rate (MFR) measured by the method described in the examples of preferably 10 g per 10 minutes or more, more preferably 20 g per 10 minutes or more, and further preferably 50 g per 10 minutes or more, and thus is excellent in molding processability. The thermoplastic elastomer composition may have a hardness measured by the method described in the examples of from 3 to 95, preferably from 3 to 90, more preferably from 3 to 85, and particularly preferably from 3 to 80, and thus is excellent in flexibility. The thermoplastic elastomer composition may have a haze value measured by the method described in the examples of from 30 to 70%, preferably from 30 to 60%, and more preferably from 30 to 50%, and thus is excellent in transparency. The thermoplastic elastomer composition may have a rebound resilience measured by the method described in the examples of from 30 to 50%, preferably from 30 to 45%, and more preferably from 30 to 40%, and thus is excellent in damping property. The thermoplastic elastomer composition may have a compression set measured by the method described in the examples of from 10 to 65%, preferably from 10 to 60%, more preferably from 10 to 55%, and further preferably from 15 to 50%, under all the conditions of 70°C, 100°C and 120°C, and thus is excellent in compression set at a high temperature.

Molded Article

The thermoplastic elastomer composition
may be molded into various kinds of molded articles, such as a sheet, a film, a tube, a hollow molded article and a die molded article, by a known method, for example, extrusion molding, injection molding, hollow (blow) molding, compression molding, press molding and calender molding. Also, the thermoplastic elastomer composition may be molded into various molded articles used as a sealing material for medical use.

The thermoplastic elastomer composition may be formed into a composite material with other materials (such as a polymer material, such as polyethylene, polypropylene, an olefin elastomer, an ABS resin and polyamide, a metal, a wood, a cloth, a nonwoven fabric, and a stone material), and the composite material may be produced by a method, such as heat fusion, solvent adhesion, ultrasonic adhesion, dielectric adhesion and laser adhesion.

Foam-Molded Article

The molded article containing the thermoplastic elastomer composition may be a foam-molded article unless the advantages of the present invention are considerably impaired. Upon forming the foam-molded article, the thermoplastic elastomer composition is molded into various molded articles with a foaming agent added thereto.

Examples of the foaming agent include an inorganic foaming agent, such as ammonium carbonate, ammonium hydrogen carbonate, sodium hydrogen carbonate, ammonium nitrite, sodium borohydride and an azide compound; an organic foaming agent, such as an N-nitroso compound, e.g., N,N'-dinitrosopentamethylenetetramine and N,N'-dimetyyl-N,N'-dinitrosoterephthalamide, an azo compound, e.g., azobisisobutyronitrile, azodicarbonamide and barium azodicarboxylate, a fluorinated alkane, e.g., trichloromonofluoromethane and dichloromonofluoromethane, a sulfonylhydrazine compound, e.g., p-toluenesulfonyl hydrazide, diphenylsulfone-3,3'-disulfonyl hydrazide, 4,4'-oxybis (benzenesulfonyl hydrazide) and allylbis (sulfonyl hydrazide), a sulfonylsemicarbazide compound, e.g., p-toluylenesulfonylsemicarbazide and 4,4'-oxybis(benzenesulfonylsemicarbazide), and a triazole compound, e.g., 5-morpholyl-1,2,3,4-thiatriazole; and thermoexpandable fine particles containing a thermoexpandable compound, such as isobutane and pentane, encapsulated in microcapsules formed of a thermoplastic resin of vinylidene chloride, acrylonitrile, an acrylate ester, a methacrylate ester or the like. These materials may be used solely or as a combination of two or more kinds thereof.

Examples of the commercially available products of the thermoexpandable fine particles include "Microsphere" (a trade name, epoxy resin-encapsulated microcapsules), produced by Matsumoto Yushi-Seiyaku Co., Ltd., "Fillite" (a trade name, inorganic microbaloons), produced by Japan Fillite Co., Ltd., and "Expancel" (a trade name, organic microbaloons), produced by Akzo Nobel Co., Ltd. Among the foaming agents, an inorganic foaming agent, an azo compound and a sulfonylhydrazine compound are preferred from the standpoint of safety for human bodies.

In the case where the foam-molded article is produced, the amount of the foaming agent used is generally preferably from 0.1 to 3% by mass, and more preferably from 0.3 to 2.8% by mass, based on the total mass of the thermoplastic elastomer composition. When the amount of the foaming agent mixed is 0.1% by mass or more, the resulting foam-molded article may have a sufficient foaming magnification and thus is excellent in rubber elasticity, and when the amount is 3% by mass or less, it may prevents excessive growth of foamed cells, which causes failure of formation of a molded article having appropriate independent foamed cells. As a foaming agent, a master batch containing the aforementioned foaming agent with a thermoplastic resin, such as a polyolefin, is also commercially available and may be used herein. In this case, the amount of the foaming agent mixed is calculated from a value obtained by multiplying the mass of the master batch by the mixing ratio of the foaming agent.

In the case where the foam-molded article is produced, a nucleating agent may be used depending on necessity. Examples of the nucleating agent include a metal oxide, a composite oxide, a metal carbonate, a metal sulfate and a metal hydroxide, such as talc, silica, alumina, mica, titania, zinc oxide, zeolite, calcium carbonate, magnesium carbonate, barium sulfate and aluminum hydroxide. In the case where the nucleating agent is used, the amount thereof is generally preferably from 0.1 to 3 parts by mass, and more preferably from 0.1 to 2 parts by mass, per 100 parts by mass of the thermoplastic elastomer composition, whereby the cell diameter of the foamed cells of the foam-molded article may be easily controlled, and the foam-molded article may have suitable flexibility.

The method of adding the nucleating agent is not particularly limited, and examples thereof include a method of dry-blending with the thermoplastic elastomer composition, and a method of melt-kneading with the components upon producing the thermoplastic elastomer composition.

The thermoplastic elastomer composition used in the present invention contains the hydrogenated block copolymer (a) as an essential component, which is excellent in absorption of the softening agent (b), and thus is excellent in fluidity (MFR), which derives excellent molding processability and excellent handleability upon melt-kneading.

The molded article containing the composition is excellent in flexibility, visual transparency, damping property, retention of a softening agent, and compression set at a high temperature (for example, from 70 to 120°C), and has these properties in a well balanced manner. The molded article containing the thermoplastic elastomer composition is excellent in oxygen gas barrier property, liquid leakage resistance (sealing property), coring resistance, and liquid leakage resistance after needlestick, and thus is useful particularly as a sealing material for medical use.

With respect to the oxygen gas barrier property, the oxygen transmission rate measured by the method described in the examples may be in a range of from 3,000 to 80,000, preferably from 4,000 to 80,000, more preferably from 4,000 to 70,000, further preferably from 4,000 to 60,000, and particularly preferably from 4,000 to 55,000 (unit: $mL \cdot 20 \mu m/m^2 \cdot day \cdot atm$).

Examples

The present invention will be described in more detail with reference to examples below, but the present invention is not limited to the examples. The properties and characteristics in Reference Examples, Examples and Comparative Examples were evaluated in the following manners.

(1) Content of Polymer Block (A) in Hydrogenated Block Copolymer

The block copolymer (a) or (a') after hydrogenation was dissolved in $CDCl_3$ and measured for the $^1$H-NMR spectrum (apparatus: JNM-Lambda 500 (produced by JEOL, Ltd., measurement temperature: 50°C), and the content of the polymer block (A) was calculated from the peak intensity derived from styrene.

(2) Peak Top Molecular Weight (Mp)

The polymer block (A) before hydrogenation and the hydrogenated block copolymer (a) or (a') after hydrogenation were each measured for the peak top molecular weight (Mp) in terms or polystyrene by gel permeation chromatography (GPC) measurement.

Apparatus: Gel Permeation Chromatograph "HLC-8020" (produced by Tosoh Corporation)
Columns: G4000HXL (produced by Tosoh Corporation) × 2
Eluent: tetrahydrofuran, flow rate: 1 mL/min
Injection volume: 150 μl

Concentration: 5 mg/10 mL (block copolymer/tetrahydrofuran)
Column temperature: 40°C
Calibration curve: prepared with standard polystyrene
Detecting method: differential refractometry (RI)

(3) Hydrogenation Degree of Hydrogenated Block Copolymer (a) or (a')

The block copolymer was measured for the iodine value before and after hydrogenation, and the hydrogenation degree (%) of the hydrogenated block copolymer (a) or (a') was calculated from the measured values.

```
hydrogenation degree (%) =

(1 - (iodine value of block copolymer after hydrogenation /

iodine value of block copolymer before hydrogenation)) × 100
```

(4) Vinyl Bond Content of Polymer Block (B)

The block copolymer before hydrogenation was dissolved in $CDCl_3$ and measured for the $^1$H-NMR spectrum (apparatus: JHM-Lambda 500 (produced by JEOL, Ltd., measurement temperature: 50°C), and the vinyl bond content (i.e., the total content of the 3,4-bond unit and the 1,2-bond unit) was calculated from the ratio of the total peak area of the structural units derived from isoprene, butadiene or the mixture of isoprene and butadiene, and the peak area corresponding to the 3,4-bond unit and the 1,2-bond unit of the isoprene structural unit, the 1,2-bond unit of the butadiene structural unit, or these bond units in the case of the mixture of isoprene and butadiene.

(5) Bulk Density

The hydrogenated block copolymer (a) or (a') in the form of powder was weighed and placed in a measuring cylinder for measuring the volume, and the mass of the hydrogenated block copolymer (a) or (a') was divided by the volume to provide the bulk density.

(6) Absorption of Softening Agent (b)

15 kg of a mixture obtained by preliminarily blending the components constituting the thermoplastic elastomer composition described in Examples or Comparative Examples was preliminarily mixed with Super Mixer "XEM-B-554" (a trade name, produced by Kawata MFG Co., Ltd., internal capacity: 100 L) at 1,000 rpm for 5 minutes, and then taken out therefrom. After 10 minutes, the mixture was placed in a hopper with a repose angle of 60° and observed for the state thereof, which was evaluated according to the following standard.

A: The hydrogenated block copolymer (a) or (a') and the softening agent (b) spontaneously fell down from the hopper without separation.
B: It was confirmed that the hydrogenated block copolymer (a) or (a') and the softening agent (b) separated from each other, and/or did not spontaneously fall down from the hopper.

(7) Hardness (Flexibility)

A sheet test piece having a dimension of 110 mm in length, 110 mm in width and 2 mm in thickness was produced with pellets of the thermoplastic elastomer composition obtained in Examples or Comparative Examples by using an injection molding machine ("IS-55EPN, produced by Toshiba Machine Co., Ltd.) at 200°C, and three of the injection-molded sheets were accumulated and measured for the hardness with a thickness of 6 mm according to JIS K6253. The hardness meter used was a type A durometer, and the momentary value was recorded as the measured value. A molded article that is determined to be excellent in flexibility has a type A hardness of preferably 95 or less, more preferably 90 or less, and further preferably 85 or less.

(8) Melt Flow Rate (MFR) (Molding Processability)

Pellets of the thermoplastic elastomer composition obtained in Examples or Comparative Examples were measured for the weight of the thermoplastic elastomer composition that was discharged from the capillary per unit time, according to JIS K7210, which was designated as an index of the molding processability. The measurement temperature was 230°C, and the load was 49.0 N.

The MFR measured under the conditions that is preferably 10 g per 10 minutes or more, and more preferably 20 g per 10 minutes or more, shows that the resulting thermoplastic elastomer composition is excellent in molding processability.

Retention of Softening Agent (b)

A sheet test piece having a dimension of 110 mm in length, 110 mm in width and 2 mm in thickness was produced with pellets of the thermoplastic elastomer composition obtained in Examples or Comparative Examples by using an injection molding machine ("IS-55EPN, produced by Toshiba Machine Co., Ltd.) at 200°C, and after placing in a box dryer ("PO-50", produced by Matsui MFG Co., Ltd.) at 50°C for 10 days, was visually observed for the presence of oil bleed on the surface of the test piece. The resulting molded article that is free from oil bleed under the conditions is excellent in retention of the softening agent (b) .

A: no oil bleed found
B: oil bleed found

(10) Haze Value (Visual Transparency)

A sheet test piece having a dimension of 110 mm in length, 110 mm in width and 2 mm in thickness was produced with pellets of the thermoplastic elastomer composition obtained in Examples or Comparative Examples by using an injection molding machine ("IS-55EPN, produced by Toshiba Machine Co., Ltd.) at 200°C, and measured for the haze value of the sheet having a thickness of 2 mm with a reflection and transmission meter ("Model HR-100", produced by Murakami Color Research Laboratory Co., Ltd.) according to the method specified in JIS K7105 relating to transparency measurement. The haze value is preferably 70% or less, and more preferably 60% or less. When the haze value is in the range, the resulting molded article is excellent in visual transparency.

(11) Rebound resilience (Damping Property)

Pellets of the thermoplastic elastomer composition obtained in Examples or Comparative Examples were compression-molded with a compression molding machine at 200°C for 3 minutes, thereby producing a columnar test piece having a diameter of 29.0 ± 0.5 mm and a thickness of 12.5 ± 0.5 mm. The test piece was measured for the rebound resilience at 25°C with a Lupke type rebound resilience tester according to JIS K6255. A smaller rebound resilience means better damping property. The rebound resilience is preferably 50% or less, and more preferably 45% or less. When the rebound resilience is in the range, the resulting molded article is excellent in damping property.

(12) Oxygen transmission rate (Oxygen Gas Barrier Property)

The oxygen transmission rate (mL·20 $\mu$m/m$^2$·day·atm) was measured by a differential pressure type gas chromatography method according to JIS K7126-1 (differential pressure method).

Specifically, the thermoplastic elastomer composition obtained in Examples or Comparative Examples was compression-molded with a compression molding machine at 230°C for 2 minutes, thereby producing a film test piece having a thickness of 300 $\mu$m, and the test piece was measured with a gas permeability measuring device ("GTR-10", Yanagimoto Mfg. Co., Ltd.) at an oxygen pressure of 0.25 MPa, a measurement temperature of 35°C and a measurement humidity of 0%RH. The measured values were values that were converted for 20 $\mu$m.

When the oxygen transmission rate is preferably 80,000 mL·20 $\mu$m/m$^2$·day·atm or less, more preferably 70,000 mL·20 $\mu$m/m$^2$·day·atm or less, and further preferably 60,000 mL·20 $\mu$m/m$^2$·day·atm or less, the molded article is excellent in oxygen gas barrier property.

(13) Compression set

A columnar test piece having a diameter of 13.0 ± 0.5 mm and a thickness of 6.3 ± 0.3 mm was produced with pellets of the thermoplastic elastomer composition obtained in Examples or Comparative Examples by using a compression molding machine at 200°C for 3 minutes. The columnar test piece was measured for the compression set after maintaining 25% compression deformation for 22 hours at three points, 70°C, 100°C and 120°C, according to JIS K6262. A smaller value thereof means better compression set at a high temperature. The value is preferably 65% or less under all the conditions of 70°C, 100°C and 120°C, more preferably 60% or less under all the conditions of 70°C, 100°C and 120°C, and further preferably 55% or less under all the conditions of 70°C, 100°C and 120°C. When the compression set is in the range, the resulting molded article is excellent in compression set at a high temperature. The case where the columnar test piece was broken by cracking was shown as "broken".

(14) Performance Evaluation of Stopper

(i) Liquid Leakage Resistance (Sealing Property)

A columnar stopper having a diameter of 2.1 cm and a length of 2.0 cm was produced by press-molding pellets of the thermoplastic elastomer composition obtained in Examples or Comparative Examples under conditions of a melt temperature of 200°C and a pressing pressure of 10 MPa.

After charging 500 mL of water in a transparent glass bottle having an inner capacity of 500 mL, and the mouth of the bottle (diameter of 2.0 cm and a length of 2.0 cm) was sealed by inserting the stopper thereto. The bottle was heated in an autoclave to 120°C for 60 minutes and then taken out therefrom, and liquid leakage at the mouth of the bottle was visually observed, and evaluated according to the following standard.

A: no liquid leakage occurred
B: liquid leakage occurred

(ii) Coring Resistance

A columnar stopper having a diameter of 2.1 cm and a length of 2.0 cm was produced in the same manner as in the item (i) above. After charging 500 mL of water in the same transparent glass bottle as in the item (i), and the mouth of the bottle (diameter of 2 . 0 cm and a length of 2.0 cm) was sealed by inserting the stopper thereto until the upper surface of the stopper and the mouth of the bottle formed a planar surface. The assembly was seamed with an aluminum cap, and after removing the center part of the aluminum cap, a standard injection needle (22G) was penetrated to the center of the stopper without rotation of the needle perpendicularly to the upper surface of the stopper ten times while changing the position of penetration.

The coring resistance was evaluated by counting the number of fractures of the thermoplastic elastomer composition that were separated from the stopper by penetration of the injection needle and floated in water. A smaller number of fractures floating in water means better coring resistance.

(iii) Liquid Leakage Resistance After Needlestick

A columnar stopper having a diameter of 2.1 cm and a length of 2.0 cm was produced in the same manner as in the item (i) above. After charging 500 mL of water in the same transparent glass bottle as in the item (i), and the mouth of the bottle (diameter of 2.0 cm and a length of 2.0 cm) was sealed by inserting the stopper thereto until the upper surface of the stopper and the mouth of the bottle formed a planar surface. An injection needle (22G) was penetrated to the stopper from the outer surface thereof, and separately therefrom, a bleeding needle was penetrated to the stopper. The bottle was turned upside down for discharging water in the bottle through the injection needle until the amount of water in the bottle reached 150 mL, and then the injection needle was withdrawn, at which bleed of water was visually observed and evaluated according to the following standard.

A: no liquid leakage occurred
B: liquid leakage occurred

Reference Example 1 (Production of Hydrogenated Block Copolymer (a)-1)

1.84 kg of styrene and 55.8 kg of cyclohexane as a solvent were charged in a pressure resistant vessel substituted with dried nitrogen. To the solution, 45 mL of sec-butyl lithium (10% by mass cyclohexane solution) as an initiator was added, which was polymerized at 60°C for 1 hour. After adding 305 g of tetrahydrofuran as a Lewis base to the reaction mixture, 8.57 kg of isoprene was added thereto, followed by polymerizing for 2 hours, and then 1.84 kg of styrene was further added thereto, followed by polymerizing for 1 hour, thereby providing a reaction solution containing a polystyrene-polyisoprene-polystyrene triblock copolymer. After collecting a small portion of the reaction solution for analysis, palladium carbon (palladium carried amount: 5% by mass) as a hydrogenation catalyst was added thereto in an amount of 5% by mass based on the copolymer, and hydrogenation reaction was performed under conditions of a hydrogen pressure of 2 MPa and a temperature of 150°C for 5 hours. After cooling and releasing the pressure, the palladium carbon was removed by filtration, and then the filtrate was heated again to 80°C and fed to hot water at 110°C at a rate of 100 kg/hr. Simultaneously, steam at 1 MPa was fed thereto at a rate of 50 kg/hr, thereby performing steam stripping at a temperature inside the reaction vessel of 110 ± 2°C. The resulting slurry was dehydrated with a compression dehydrator to a water content of 45%, and then dried at 120°C with a plate dryer, thereby providing a hydrogenated product of a polystyrene-polyisoprene-polystyrene triblock copolymer having a water content of 0.1% by mass in the form of powder (which is hereinafter referred to as a hydrogenated block copolymer (a) -1). The resulting hydrogenated block copolymer (a)-1 had a hydrogenation degree of 97.2%, a content of the polymer block (A) of 29.4% by mass, a peak top molecular weight of the polymer block (A) of 37,500, a peak top molecular weight (Mp) of the hydrogenated block copolymer (a)-1 of 315,000, a vinyl bond content of the polymer block (B) of 55.2%, and a bulk density of 0.22 g/mL.

The data of properties of the hydrogenated block copolymer (a)-1 are shown in Table 1.

Reference Example 2 (Production of Hydrogenated Block Copolymer (a')-2)

The polymerization reaction, hydrogenation reaction, catalyst removal and drying were performed in the same manners as in Reference Example 1 except for the use of 55.8 kg of cyclohexane as a solvent, 59 mL of sec-butyl lithium (10% by mass cyclohexane solution) as an initiator, 99 g of N,N,N',N'-tetramethylethylenediamine as a Lewis base, and as monomers to be polymerized, 1.84 kg of styrene, 8.57 kg of butadiene and 1.84 kg of styrene, which were sequentially added for polymerization, thereby providing a hydrogenated product of a polystyrene-polybutadiene-polystyrene triblock copolymer (which is hereinafter referred to as a hydrogenated block copolymer (a')-2). The resulting hydrogenated block copolymer (a')-2 had a hydrogenation degree of 98.8%, a content of the polymer block (A) of 29.3% by mass, a peak top molecular weight of the polymer block (A) of 28,500, a peak top molecular weight (Mp) of the hydrogenated block copolymer (a')-2 of 309, 000, a vinyl bond content of the polymer block (B) of 73.2%, and a bulk density of 0.20 g/mL.

The data of properties of the hydrogenated block copolymer (a')-2 are shown in Table 1.

Reference Example 3 (Production of Hydrogenated Block Copolymer (a')-3)

The polymerization reaction, hydrogenation reaction, catalyst removal and drying were performed in the same manners as in Reference Example 1 except for the use of 55.8 kg of cyclohexane as a solvent, 53 mL of sec-butyl lithium (10% by mass cyclohexane solution) as an initiator, no Lewis base added, and as monomers to be polymerized, 1.59 kg of styrene, 7.44 kg of a mixture of isoprene and butadiene (isoprene/butadiene = 55/45 (molar ratio)) and 1.59 kg of styrene, which were sequentially added for polymerization, thereby providing a hydrogenated product of a polystyrene-poly(isoprene/butadiene)-polystyrene triblock copolymer (which is hereinafter referred to as a hydrogenated block copolymer (a')-3). The resulting hydrogenated block copolymer (a')-3 had a hydrogenation degree of 98.9%, a content of the polymer block (A) of 29.4% by mass, a peak top molecular weight of the polymer block (A) of 27,500, a peak top molecular weight (Mp) of the hydrogenated block copolymer (a')-3 of 303,000, a vinyl bond content of the polymer block (B) of 8.1%, and a bulk density of 0.22 g/mL.

The data of properties of the hydrogenated block copolymer (a')-3 are shown in Table 1.

Reference Example 4 (Production of Hydrogenated Block Copolymer (a')-4)

The polimerization reaction, hydrogenation reaction, catalyst removal and drying were performed in the same manners as in Reference Example 1 except for the use of 55.8 kg of cyclohexane as a solvent, 26 mL of sec-butyl lithium (10% by mass cyclohexane solution) as an initiator, no Lewis base added, and as monomers to be polymerized, 1.25 kg of styrene, 5.83 kg of a mixture of isoprene and butadiene (isoprene/butadiene = 55/45 (molar ratio)) and 1.25 kg of styrene, which were sequentially added for polymerization, thereby providing a hydrogenated product of a polystyrene-poly(isoprene/butadiene)-polystyrene triblock copolymer (which is hereinafter referred to as a hydrogenated block copolymer (a')-4). The resulting hydrogenated block copolymer (a')-4 had a hydrogenation degree of 98.7%, a content of the polymer block (A) of 29.4% by mass, a peak top molecular weight of the polymer block (A) of 45,800, a peak top molecular weight (Mp) of the hydrogenated block copolymer (a')-4 of 495,000, a vinyl bond content of the polymer block (B) of 7.4%, and a bulk density of 0.23 g/mL.

The data of properties of the hydrogenated block copolymer (a')-4 are shown in Table 1.

Reference Example 5 (Production of Hydrogenated Block Copolymer (a')-5)

The polymerization reaction, hydrogenation reaction, catalyst removal and drying were performed in the same manners as in Reference Example 1 except for the use of 55.8 kg of cyclohexane as a solvent, 65 mL of sec-butyl lithium (10% by mass cyclohexane solution) as an initiator, 312 g of tetrahydrofuran as a Lewis base, and as monomers to be polymerized, 2.02 kg of styrene, 9.90 kg of isoprene and 2.02 kg of styrene, which were sequentially added for polymerization, thereby providing a hydrogenated product of a polystyrene-polyisoprene-polystyrene triblock copolymer (which is hereinafter referred to as a hydrogenated block copolymer (a')-5). The resulting hydrogenated block copolymer (a')-5 had a hydrogenation degree of 97.0%, a content of the polymer block (A) of 28.5% by mass, a peak top molecular weight of the polymer block (A) of 26,000, a peak top molecular weight (Mp) of the hydrogenated block copolymer (a')-5 of 225,000, a vinyl bond content of the polymer block (B) of 58.2%, and a bulk density of 0.44 g/mL.

The data of properties of the hydrogenated block copolymer (a')-5 are shown in Table 1.

Table 1

|  | Reference Example 1 | Reference Example 2 | Reference Example 3 | Reference Example 4 | Reference Example 5 |
|---|---|---|---|---|---|
|  | Hydrogenated block copolymer | | | | |
|  | (a)-1 | (a')-2 | (a')-3 | (a')-4 | (a')-5 |
| Content of polymer block (A) (% by mass) | 29.4 | 29.3 | 29.4 | 29.4 | 28.5 |
| Peak top molecular weight of polymer block (A) | 37,500 ' | 28,500 | 27,500 | 45,800 | 26,000 |
| Compound deriving structural uni t of polymer block (B) | isoprene | butadiene | isoprene and butadiene | isoprene and butadiene | isoprene |
| Vinyl bond content of polymer block (B) (%) | 55.2 | 73.2 | 8.1 | 7.4 | 58.2 |
| Peak top molecular weight of hydrogenated block copolymer | 315,000 | 309,000 | 303,000 | 495,000 | 225,000 |
| Hydrogenation degree of hydrogenated block copolymer (%) | 97.2 | 98.8 | 98.9 | 98.7 | 97 |
| Bulk density of hydrogenated block copolymer (g/mL) | 0.22 | 0.20 | 0.22 | 0.23 | 0.44 |

Reference Example 6 (Production of Softening Agent (b)-3)

The polymerization reaction and hydrogenation reaction were performed in the same manners as in Reference Example 1 except for the use of 55.8 kg of cyclohexane as a solvent, 5,971 mL of sec-butyl lithium (10% by mass cyclohexane solution) as an initiator, no Lewis base added, and as monomers to be polymerized, 12.55 kg of styrene and 71.10 kg of isoprene, which were sequentially added for polymerization, thereby providing a hydrogenated product of a polystyrene-polyisoprene diblock copolymer in the form of a liquid substance (which is hereinafter referred to as a softening agent (b)-3).

The resulting softening agent (b)-3 had a hydrogenation degree of 98.7%, a content of a styrene polymer block of 14.5% by mass, and a peak top molecular weight of 31,500.

Examples 1 to 10 and Comparative Examples 1 to 18

The components in the formulations shown in Tables 2 to 4 (unit: part by mass) having been preliminarily mixed were fed to a twin screw extruder ("TEM-35B", produced by Toshiba Machine Co., Ltd.) and melt-kneaded and extruded under conditions of a cylinder temperature of 210°C and a screw revolution number of 200 rpm into strands, which were cut with a pelletizer connected to the twin screw extruder, thereby producing pellets of the thermoplastic resin compositions.

The resulting pellets of the thermoplastic resin compositions were measured for MFR according to the method described above, and test pieces were produced with the pellets and measured for the absorption of the softening agent, the hardness, the retention of the softening agent, the haze value, the rebound resilience, the oxygen transmission rate, the compression set, and the capability of the stopper (i.e., the liquid leakage resistance, the coring resistance and the liquid leakage resistance after needlestick). The results are shown in Tables 2 to 4.

The components shown in Table 2 to 4 are as follows.

Softening Agent (b)-1: Diana Process Oil PW-90 (paraffin process oil, produced by Idemitsu Kosan Co., Ltd.)
Softening Agent (b)-2: low molecular weight polyisobutyrene, Vistanex LM-MS-LC, produced by Exxon Mobil Chemical Corporation, peak top molecular weight: 51,700
Polyolefin Resin (c)-1: random polypropylene, F327, produced by Prime Polymer Co., Ltd. (MFR: 7 g per 10 minutes (230°C, 21.2 N load)
Polyolefin Resin (c)-2: homopolypropylene, J107G, produced by Prime Polymer Co., Ltd. (MFR: 30 g per 10 minutes (230°C, 21.2 N load)

Table 2

| | Example |||||||||| |
|---|---|---|---|---|---|---|---|---|---|---|
| | 1 | 2 | 3 | 4 | 5 | 6 | 7 | 8 | 9 | 10 |
| **Thermoplastic Elastomer Composition** | | | | | | | | | | |
| Hydrogenated block copolymer (a)-1 | 100 | 100 | 100 | 100 | 100 | 100 | 100 | 100 | 100 | 100 |
| Softening agent (b)-1 | 100 | 100 | 100 | 50 | 50 | 250 | 250 | 100 | | |
| Softening agent (b)-2 | | | | | | | | | 100 | |
| Softening agent (b)-3 | | | | | | | | | | 100 |
| Polyolefin resin (c)-1 | 20 | 40 | 60 | | | | | | 50 | 50 |
| Polyolefin resin (c)-2 | | | | 100 | 150 | 25 | 45 | 40 | | |
| **Properties and Characteristics** | | | | | | | | | | |
| Absorption of softening agent (b) | A | A | A | A | A | A | A | A | A | A |
| Hardness (type A) | 40 | 63 | 78 | 88 | 89 | 4 | 42 | 56 | 73 | 70 |
| MFR (g/10 min) | 21 | 130 | > 500 | 55 | 70 | > 500 | > 500 | 88 | 207 | 350 |
| Retention of softening agent (b) | A | A | A | A | A | A | A | A | A | A |
| Haze value (%) | 43 | 39 | 67 | 65 | 66 | 55 | 60 | 35 | 48 | |
| Rebound resilience (%) | 44 | 39 | 38 | 39 | 37 | 39 | 38 | 41 | 39 | 41 |
| Oxygen transmission rate (mL·20 μm/m²·day·atm) | 63,800 | 52,100 | 39,700 | 21,000 | 14,000 | 74,800 | 64,800 | 54,400 | 4,500 | 21,000 |
| Compression set (%) 70°C | 22 | 33 | 37 | 53 | 62 | 17 | 21 | 36 | 52 | 40 |
| Compression set 100°C | 40 | 44 | 52 | 54 | 63 | 39 | 39 | 47 | 60 | 44 |
| Compression set 120°C | 42 | 45 | 54 | 56 | 63 | 46 | 46 | 48 | 62 | 47 |
| **Performance Evaluation of Stopper** | | | | | | | | | | |
| Liquid leakage resistance | A | A | A | A | A | A | A | A | A | A |
| Coring resistance (number of fractures) | 0 | 0 | 0 | 0 | 0 | 0 | 0 | 0 | 0 | 0 |
| Liquid leakage resistance after needlestick | A | A | A | A | A | A | A | A | A | A |

Table 3

| | Comparative Example | | | | | | | | | |
|---|---|---|---|---|---|---|---|---|---|---|
| | 1 | 2 | 3 | 4 | 5 | 6 | 7 | 8 | 9 | 10 |
| Thermoplastic Elastomer Composition | | | | | | | | | | |
| Hydrogenated block copolymer (a)-1 | | | | | | | | | | |
| Hydrogenated block copolymer (a')-2 | 100 | | | | | | | | | |
| Hydrogenated block copolymer (a') -3 | | 100 | 100 | 100 | 100 | 100 | 100 | 100 | 100 | |
| Hydrogenated block copolymer (a')-4 | | | | | | | | | | 100 |
| Hydrogenated block copolymer (a')-5 | | | | | | | | | | |
| Softening agent (b)-1 | 100 | 100 | 100 | 100 | 50 | 50 | 250 | 250 | 100 | 100 |
| Softening agent (b) -2 | | | | | | | | | | |
| Softening agent (b) -3 | | | | | | | | | | |
| Polyolefin resin (c)-1 | 40 | 20 | 40 | 60 | | | | | | 40 |
| Polyolefin resin (c)-2 | | | | | 100 | 150 | 25 | 45 | 40 | |
| Properties and Characteristics | | | | | | | | | | |
| Absorption of softening agent (b) | A | A | A | A | A | A | A | A | A | A |
| Hardness (type A) | 61 | 41 | 61 | 76 | 93 | 97 | 19 | 45 | 70 | 65 |
| MFR (g/10 min) | 14 | 0.4 | 8.0 | 17 | 27 | 33 | 184 | 190 | 21 | 3.8 |
| Retention of softening agent (b) | A | A | A | A | A | A | A | A | A | A |
| Haze value (%) | 65 | 71 | 74 | 78 | 83 | 87 | 58 | 70 | 83 | 72 |
| Rebound resilience (%) | 54 | 62 | 52 | 48 | 45 | 42 | 66 | 60 | 51 | 54 |
| Oxygen transmission rate (mL·20 $\mu$m/m$^2$·day·atm) | 62,700 | 77,700 | 66,900 | 62,500 | 34,100 | 24,800 | 92,100 | 81,000 | 68,500 | 67,400 |
| Compression set (%) — 70°C | 38 | 28 | 36 | 39 | 59 | 64 | 31 | 34 | 42 | 39 |
| Compression set (%) — 100°C | 63 | 44 | 54 | 56 | 61 | 63 | 57 | 60 | 50 | 49 |
| Compression set (%) — 120°C | 68 | 50 | 57 | 59 | 63 | 66 | 75 | 79 | 54 | 52 |
| Performance Evaluation of Stopper | | | | | | | | | | |
| Liquid leakage resistance | A | A | A | A | B | B | A | A | A | A |

(continued)

| Performance Evaluation of Stopper | | | | | | | | | | |
|---|---|---|---|---|---|---|---|---|---|---|
| Coring resistance (number of fractures) | 0 | 3 | 0 | 1 | 0 | 0 | 5 | 5 | 1 | 2 |
| Liquid leakage resistance after needlestick | A | A | A | A | A | B | A | B | A | A |

Table 4

| | Comparative Example | | | | | | | |
|---|---|---|---|---|---|---|---|---|
| | 11 | 12 | 13 | 14 | 15 | 16 | 17 | 18 |
| Thermoplastic Elastomer Composition | | | | | | | | |
| Hydrogenated block copolymer (a)-1 | | | 100 | 100 | | | | 100 |
| Hydrogenated block copolymer (a')-2 | | | | | | | | |
| Hydrogenated block copolymer (a')-3 | | | | | | 100 | 100 | |
| Hydrogenated block copolymer (a')-4 | | | | | | | | |
| Hydrogenated block copolymer (a')-5 | 100 | 100 | | | 100 | | | |
| Softening agent (b)-1 | 100 | 250 | 350 | | | | | 350 |
| Softening agent (b)-2 | | | | | | 100 | | |
| Softening agent (b)-3 | | | | | | | 100 | |
| Polyolefin resin (c)-1 | 40 | | 2 | 150 | 150 | 50 | 50 | 40 |
| Polyolefin resin (c)-2 | | 25 | | | | | | |
| Properties and Characteristics | | | | | | | | |
| Absorption of softening agent (b) | B | B | A | - | - | A | A | A |
| Hardness (type A) | 37 | immeasurable | 1 | 99 | 99 | 72 | 71 | 38 |
| MFR (g/10 min) | > 500 | immeasurable | > 500 | 4.4 | 22 | 48 | 1.3 | > 500 |
| Retention of softening agent (b) | B | immeasurable | A | - | - | A | A | A |
| Haze value (%) | 38 | immeasurable | 35 | 75 | 36 | 75 | 77 | 55 |
| Rebound resilience (%) | 38 | immeasurable | 35 | 32 | 30 | 54 | 52 | 43 |
| Oxygen transmission rate (mL·20 $\mu$m/m$^2$·day·atm) | 54,000 | immeasurable | 98,800 | 6,700 | 6,400 | 13,600 | 37,200 | 89,000 |
| Compression set (%) 70°C | 87 | immeasurable | 15 | 65 | 76 | 54 | 40 | 28 |
| Compression set (%) 100°C | 98 | immeasurable | broken | 71 | 84 | 72 | 46 | broken |
| Compression set (%) 120°C | 100 | immeasurable | broken | 72 | 84 | 79 | 47 | broken |
| Performance Evaluation of Stopper | | | | | | | | |
| Liquid leakage resistance | B | B | A | A | B | A | A | A |

(continued)

| Performance Evaluation of Stopper | | | | | | | | |
|---|---|---|---|---|---|---|---|---|
| Coring resistance (number of fractures) | 0 | 5 | 6 | 0 | 0 | 0 | 1 | 5 |
| Liquid leakage resistance after needlestick | A | B | B | A | A | A | B | B |

It is understood from Table 2 that the thermoplastic elastomer compositions obtained in Examples 1 to 10 are excellent in absorption of the softening agent (b), hardness, molding processability, retention of the softening agent (b), visual transparency, damping property, and compression set at a high temperature, and have these properties in a well balanced manner. Furthermore, it is understood that the molded articles obtained by molding the thermoplastic elastomer compositions obtained in Examples 1 to 10 are excellent in oxygen gas barrier property, and the stoppers are excellent in all of liquid leakage resistance, coring resistance, and liquid leakage resistance after needlestick.

On the other hand, it is understood from Table 3 that the thermoplastic elastomer composition obtained in Comparative Example 1 is deteriorated in rebound resilience and compression set at 120°C since the polymer block (B) constituting the hydrogenated block copolymer (a')-2 is constituted only by the butadiene unit.

It is understood from Tables 3 and 4 that Comparative Examples 2 to 9, 16 and 17 are deteriorated in hardness, MFR, haze value, rebound resilience, and compression set at a high temperature since the vinyl bond content of the polymer block (B) constituting the hydrogenated block copolymer (a')-3 is 8.1%, which is smaller than the requirement of the present invention.

Specifically, Comparative Examples 2 and 3 are deteriorated in MFR, haze value and rebound resilience. In particular, Comparative Example 2 is inferior in coring resistance of the stopper. Comparative Example 4 is deteriorated in haze value, and the coring resistance of the stopper is also insufficient. Comparative Example 5 is deteriorated in haze value, and the liquid leakage resistance of the stopper is deteriorated. Comparative Example 6 is deteriorated in hardness, haze value, and compression set at 120°C, and the liquid leakage resistance and the liquid leakage resistance after needlestick of the stopper are also deteriorated. Comparative Example 7 is deteriorated in rebound resilience, oxygen transmission rate, and compression set at 120°C, and the coring resistance of the stopper is deteriorated. Comparative Example 8 is deteriorated in rebound resilience and compression set at 120°C, and the coring resistance and the liquid leakage resistance after needlestick of the stopper are also deteriorated. Comparative Example 9 is deteriorated in haze value and rebound resilience, and the coring resistance of the stopper is insufficient. Comparative Example 16 is deteriorated in haze value and rebound resilience, and is also deteriorated in compression set at 100°C and 120°C. Comparative Example 17 is deteriorated in haze value and rebound resilience, and is deteriorated in MFR, and the coring resistance of the stopper is insufficient, with the liquid leakage resistance after needlestick thereof being deteriorated.

Comparative Example 10 is deteriorated in MFR, haze value, and rebound resilience, and the coring resistance of the stopper is also deteriorated, since the vinyl bond content of the polymer block (B) constituting the hydrogenated block copolymer (a') -4 is 7.4%, which is smaller than the requirement of the present invention.

Comparative Examples 11 and 12 are deteriorated in absorption and retention of the softening agent (b), and in compression set at each of the measuring temperatures since the peak top molecular weight (Mp) of the hydrogenated block copolymer (a')-5 as the component thereof is 225,000, which is smaller than the requirement of the present invention, and the bulk density thereof is 0.44 g/ML, which is outside the requirement of the present invention. In particular, Comparative Example 11 is deteriorated in liquid leakage resistance of the stopper, and Comparative Example 12 is deteriorated in all liquid leakage resistance, coring resistance and liquid leakage resistance after needlestick of the stopper. The composition of Comparative Example 12 is poor in absorption state of the softening agent (b) upon preliminarily mixing, and undergoes apparently dispersion failure upon melt-kneading with the twin screw extruder, thereby failing to provide appropriate pellets, and test pieces for measuring various properties cannot be molded (indicated as "immeasurable" in Table 4).

Comparative Example 13 is deteriorated in oxygen transmission rate, the test piece is broken upon measuring the compression set at 100°C and 120°C, and the heat resistance is considerably deteriorated, since the amounts of the softening agent (b) and the polyolefin resin (c) mixed are outside the requirement of the present invention. Furthermore, the stopper is deteriorated in coring resistance and liquid leakage resistance after needlestick.

Comparative Example 18 is deteriorated in oxygen transmission rate, the test piece is broken upon measuring the compression set at 100°C and 120°C, and the heat resistance is considerably deteriorated, since the amount of the softening agent (b) mixed is outside the requirement of the present invention. Furthermore, the stopper is deteriorated in coring resistance and liquid leakage resistance after needlestick.

Comparative Example 14 is deteriorated in hardness, MFR, haze value, and compression set at 100°C and 120°C since the softening agent (b) is not contained.

Comparative Example 15 is deteriorated in hardness and compression set at 70°C, 100°C and 120°C since the peak top molecular weight (Mp) of the hydrogenated block copolymer (a')-5 as the component thereof is 225, 000, which is smaller than the requirement of the present invention, the bulk density thereof is 0.44 g/ML, which is outside the requirement of the present invention, and the softening agent (b) is not contained. Furthermore, the stopper is deteriorated in liquid leakage resistance.

Industrial Applicability

The thermoplastic elastomer composition used in the present invention is excellent in flexibility, molding processability, visual transparency, damping property, retention of a softening agent, and compression set at a high temperature, and has these properties in a well balanced manner, and therefore, the composition may be applied to various molded articles, such as a sheet, a film, a plate member, a tube, a hose pipe and a belt.

For example, the composition may be effectively applied to a wide variety of fields including various vibration absorbing or damping materials, such as damping rubber, a mat, a sheet, a cushion, a damper, a pad and a mount rubber member; a footwear application, such as sport shoes and fashion sandals; a consumer electronics application, such as a television set, a stereo audio set, a cleaner and a refrigerator; a building material application, such as a packing and a sealer used in a door and a window frame of a building; an automobile interior and exterior application, such as a bumper member, a body panel, a weather strip, agrommet, a skin material of instrument panel, and an air-bag cover; various grip members of scissors, a screwdriver, a toothbrush, poles for skiing, and the like; a food wrapping material, such as a wrapping film for foods; a protective film; a medical device, such as an infusion solution bag, a syringe and a catheter; and a stopper and a cap liner for a container for storing foods, beverages, drugs and the like.

According to the invention, this elastomer composition is either comprised in a sealing material for medical use or it is used for a member for sealing a content in the medical field.

The molded article containing the thermoplastic elastomer composition is excellent in oxygen gas barrier property, liquid leakage resistance (sealing property), coring resistance, and liquid leakage resistance after needlestick, and therefore is useful as a member for sealing a content in the medical field, for example, a sealing material for medical use, such as a stopper for a container storing a medical drug as a content, a sealing material for connecting portion of an infusion system in an infusion bag, a stopper for an infusion solution, a sealing material and a packing material for a vacuum blood collection tube, and a gasket for a syringe.

**Claims**

1. A sealing material for medical use comprising a thermoplastic elastomer composition which comprises :

    100 parts by mass of (a) a hydrogenated block copolymer that is a hydrogenated product of a block copolymer containing (A) a polymer block containing a structural unit derived from an aromatic vinyl compound and (B) a polymer block containing a structural unit derived from isoprene or a mixture of isoprene and butadiene, and having a total content of a 3,4-bond unit and a 1,2-bond unit of 45% or more, wherein block copolymer (a) has a peak top molecular weight (Mp) obtained by gel permeation chromatograph in terms of polystyrene standard of from 250,000 to 500,000, and is in a form of powder having a bulk density of from 0.10 to 0.40 g/mL;
    from 10 to 300 parts by mass of (b) a softening agent; and
    from 5 to 200 parts by mass of (c) a polyolefin resin.

2. The sealing material according to claim 1, wherein the structural unit derived from isoprene or a mixture of isoprene and butadiene is a structural unit derived from isoprene.

3. The sealing material according to claim 2, wherein the total content of a 3,4-bond unit and a 1,2-bond unit in polymer block (B) is 53 % or more.

4. The sealing material according to claim 2 or 3, wherein the total content of a 3,4-bond unit and a 1,2-bond unit in polymer block (B) is 95 % or less.

5. Use of a thermoplastic elastomer composition for a member for sealing a content in the medical field, wherein thermoplastic elastomer composition comprises:

    100 parts by mass of (a) a hydrogenated block copolymer that is a hydrogenated product of a block copolymer containing (A) a polymer block containing a structural unit derived from an aromatic vinyl compound and (B) a polymer block containing a structural unit derived from isoprene or a mixture of isoprene and butadiene, and having a total content of a 3,4 bond unit and a 1,2 bond unit of 45% or more, wherein block copolymer (a) has a peak top molecular weight (Mp) obtained by gel permeation chromatograph in terms of polystyrene standard of from 250,000 to 500,000, and is in a form of powder having a bulk density of from 0.10 to 0.40 g/mL;
    from 10 to 300 parts by mass of (b) a softening agent; and
    from 5 to 200 parts by mass of (c) a polyolefin resin.

6. Use according to claim 5, wherein the member is selected from a stopper for a container storing a medical drug as a content, a sealing material for connecting portion of an infusion system in an infusion bag, a stopper for an infusion solution, a sealing material and a packing material for a vacuum blood collection tube, and a gasket for a syringe.

**Patentansprüche**

1. Ein Dichtungsmaterial zur medizinischen Verwendung, umfassend eine thermoplastische Elastomerzusammensetzung, welche umfasst:

100 Massenteile von (a) einem hydrierten Blockcopolymer, das ein hydriertes Produkt eines Blockcopolymers ist, enthaltend (A) einen Polymerblock, der eine von einer aromatischen Vinylverbindung abgeleitete Struktureinheit enthält, und (B) einen Polymerblock, der eine von Isopren oder einem Gemisch von Isopren und Butadien abgeleitete Struktureinheit enthält, und mit einem Gesamtgehalt einer 3,4-Bindungseinheit und einer 1,2-Bindungseinheit von 45 % oder mehr, wobei das Blockcopolymer (a) ein durch Gelpermeationschromatographie erhaltenes Peakspitzenmolekulargewicht (Mp), ausgedrückt als Polystyrolstandard, von 250.000 bis 500.000 aufweist und in Form eines Pulvers mit einer Schüttdichte von 0,10 bis 0,40 g/mL vorliegt;
10 bis 300 Massenteile von (b) einem Weichmacher; und
5 bis 200 Massenteile von (c) einem Polyolefinharz.

2. Das Dichtungsmaterial nach Anspruch 1, wobei die Struktureinheit, abgeleitet von Isopren oder einem Gemisch von Isopren und Butadien, eine von Isopren abgeleitete Struktureinheit ist.

3. Das Dichtungsmaterial nach Anspruch 2, wobei der Gesamtgehalt einer 3,4-Bindungseinheit und einer 1,2-Bindungseinheit im Polymerblock (B) 53 % oder mehr beträgt.

4. Das Dichtungsmaterial nach Anspruch 2 oder 3, wobei der Gesamtgehalt einer 3,4-Bindungseinheit und einer 1,2-Bindungseinheit im Polymerblock (B) 95 % oder weniger beträgt.

5. Verwendung einer thermoplastischen Elastomerzusammensetzung für ein Element zum Abdichten eines Inhalts im medizinischen Bereich, wobei die thermoplastische Elastomerzusammensetzung umfasst:

100 Massenteile von (a) einem hydrierten Blockcopolymer, das ein hydriertes Produkt eines Blockcopolymers ist, enthaltend (A) einen Polymerblock, der eine von einer aromatischen Vinylverbindung abgeleitete Struktureinheit enthält, und (B) einen Polymerblock, der eine von Isopren oder einer Mischung aus Isopren und Butadien abgeleitete Struktureinheit enthält, und mit einem Gesamtgehalt einer 3,4-Bindungseinheit und einer 1,2-Bindungseinheit von 45 % oder mehr, wobei das Blockcopolymer (a) ein durch Gelpermeationschromatographie erhaltenes Peakspitzenmolekulargewicht (Mp), ausgedrückt als Polystyrolstandard, von 250.000 bis 500.000 aufweist und in Form eines Pulvers mit einer Schüttdichte von 0,10 bis 0,40 g/mL vorliegt;
10 bis 300 Massenteile von (b) einem Weichmacher; und
5 bis 200 Massenteile von (c) einem Polyolefinharz.

6. Verwendung nach Anspruch 5, wobei das Element ausgewählt ist aus einem Verschluss für einen Behälter, in dem ein medizinischer Arzneistoff als Inhalt aufbewahrt wird, einem Dichtungsmaterial für ein Verbindungsteil eines Infusionssystems in einem Infusionsbeutel, einem Verschluss für eine Infusionslösung, einem Dichtungsmaterial und einem Verpackungsmaterial für ein Vakuum-Blutsammelröhrchen und einer Dichtung für eine Spritze.

**Revendications**

1. Matériau de scellage pour utilisation médicale comprenant une composition d'élastomère thermoplastique qui comprend :

100 parties en masse (a) d'un copolymère séquencé hydrogéné qui est un produit hydrogéné d'un copolymère séquencé contenant (A) une séquence polymère contenant un motif de structure dérivé d'un composé de vinyle aromatique et (B) une séquence polymère contenant un motif de structure dérivé d'isoprène ou d'un mélange d'isoprène et de butadiène, et présentant une teneur totale en motif de liaison 3,4 et en motif de liaison 1,2 de 45 % ou plus, dans lequel le copolymère séquencé (a) présente un poids moléculaire au sommet du pic (Mp) obtenu par chromatographie par perméation de gel en termes d'étalon de polystyrène de 250 000 à 500 000, et est sous une forme de poudre présentant une masse volumique apparente de 0,10 à 0,40 g/mL ;
de 10 à 300 parties en masse (b) d'un plastifiant ; et
de 5 à 200 parties en masse (c) d'une résine de polyoléfine.

2. Matériau de scellage selon la revendication 1, dans lequel le motif de structure dérivé d'isoprène ou d'un mélange d'isoprène et de butadiène est un motif de structure dérivé d'isoprène.

3. Matériau de scellage selon la revendication 2, dans lequel la teneur totale en motif de liaison 3,4 et en motif de liaison 1,2 dans la séquence polymère (B) est de 53 % ou plus.

4. Matériau de scellage selon la revendication 2 ou 3, dans lequel la teneur totale en motif de liaison 3,4 et en motif de liaison 1,2 dans la séquence polymère (B) est de 95 % ou moins.

5. Utilisation d'une composition d'élastomère thermoplastique pour un élément pour sceller un contenu dans le domaine médical, dans laquelle la composition d'élastomère thermoplastique comprend :

100 parties en masse (a) d'un copolymère séquencé hydrogéné qui est un produit hydrogéné d'un copolymère séquencé contenant (A) une séquence polymère contenant un motif de structure dérivé d'un composé de vinyle aromatique et (B) une séquence polymère contenant un motif de structure dérivé d'isoprène ou d'un mélange d'isoprène et de butadiène, et présentant une teneur totale en motif de liaison 3,4 et en motif de liaison 1,2 de 45 % ou plus, dans lequel le copolymère séquencé (a) présente un poids moléculaire au sommet du pic (Mp) obtenu par chromatographie par perméation de gel en termes d'étalon de polystyrène de 250 000 à 500 000, et est sous une forme de poudre présentant une masse volumique apparente de 0,10 à 0,40 g/mL ;
de 10 à 300 parties en masse (b) d'un plastifiant ; et
de 5 à 200 parties en masse (c) d'une résine de polyoléfine.

6. Utilisation selon la revendication 5, dans laquelle l'élément est sélectionné parmi un bouchon pour un récipient stockant un médicament médical en tant que contenu, un matériau de scellage pour une partie de raccordement d'un système de perfusion dans une poche de perfusion, un bouchon pour une solution de perfusion, un matériau de scellage et un matériau d'emballage pour un tube de collecte de sang sous vide, et un joint d'étanchéité pour une seringue.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 58206644 A
- JP 59131613 A
- JP 2300218 A
- JP 6293853 A
- JP 2005281706 A
- JP 63112649 A
- JP 61037242 A
- EP 0918070 A
- EP 1852446 A
- EP 1932881 A
- JP 2007091974 A
- JP 2005255830 A
- JP H09227858 A
- JP 2004250682 A